# EUROPEAN PATENT APPLICATION

(11) **EP 2 352 251 A1**
(43) Date of publication of application: **03.08.2011**
(21) Application number: 09825912.0
(22) Date of filing: 12.11.2009
(51) Int. Cl.: H04L 9/06, H04L 9/14

(54) **CONTENT DECODING APPARATUS, CONTENT DECODING METHOD AND INTEGRATED CIRCUIT**

(30) Priority: 13.11.2008 JP 2008290528
(71) Applicant: Panasonic Corporation, Kadoma-shi Osaka 571-8501 (JP)
(72) Inventor: HYODO, Masahiko, Osaka 540-6207 (JP); IWATA, Tooru, Osaka 540-6207 (JP); KURIKI, Satoru, Osaka 540-6207 (JP); SANO, Masahiro, Osaka 540-6207 (JP)
(74) Representative: Grünecker, Kinkeldey, Stockmair & Schwanhäusser Anwaltssozietät
(86) International application number: PCT/JP2009/006033
(87) International publication number: WO 2010/055658

(57) **Abstract**

The content decrypting apparatus 2000 of the present invention stores a chaining value generated during decryption of the last ciphertext block of a chunk in association with a content type and a frame number to an inter-chunk chaining value holding unit 216. When decrypting the first ciphertext block of a chunk, and in case where a chaining value is stored to the inter-chunk chaining value holding unit 216 in association with a content type and a frame number corresponding to the chunk, the content decrypting apparatus decrypts the first ciphertext block of the chunk using the chaining value. Hence, the content decrypting apparatus pertaining to the present invention is capable of correctly decrypting data streams having a data structure in which ciphertext chunks belonging to a first encrypted frame are disposed in between two ciphertext chunks belonging to a second encrypted frame.

## Description

### [Technical Field]

The present invention relates to a content decrypting apparatus for decrypting data encrypted by employing encryption in a ciphertext block chaining method thereto.

### [Background Art]

Encrypting, or ciphering of digital data has been a common means as to prevent malicious and unauthorized exploitation of such forms of digital data as exchanged via an information-communication network or stored onto media including optical disks and the like. More specifically, encryption of data reduces the risk of third parties directly accessing and thereby misusing such digital data.

One common method employed in the encryption of data for the above purpose is the ciphertext block chaining mode (or simply the "CBC mode"). In the CBC mode, digital data is encrypted in such a manner that digital data is segmented into multiple plaintext blocks, the multiple plaintext blocks being encrypted such that the encryption of a present plaintext block influences the encryption of a successive plaintext block.

More specifically, in the CBC mode, a present plaintext block is encrypted using a chaining value which is obtained by performing a predetermined arithmetic processing onto a chaining value used in the encryption of a preceding plaintext block.

Hence, digital data encrypted in the CBC mode is constituted of a sequence of ciphertext blocks arranged in the order of encryption, each of the ciphertext blocks being obtained by encryption of a corresponding plaintext block.

The decryption of ciphertext blocks in the CBC mode resembles the encryption of plaintext blocks in the CBC mode. In the decryption of ciphertext blocks in the CBC mode, a present ciphertext blocks is decrypted using a chaining value which is obtained by performing a predetermined arithmetic processing onto a chaining value used in the decryption of a preceding ciphertext block.

As technology applicable in the decryption of data encrypted in the CBC mode, such technologies as, for instance, launching decryption of a subsequent ciphertext block at an earlier time point, by performing the generation of a chaining value for decrypting the subsequent ciphertext block in parallel with the decryption of the present ciphertext block (refer to Patent Literature 1), have been suggested.

### [Citation List]

### [Patent Literature]

[Patent Literature 1] Japanese Patent Application Publication No. 2000-295212

### [Summary of Invention]

### [Technical Problem]

Meanwhile, when there is a need of integrating multiple data streams, for instance a video data stream and an audio data stream each being respectively composed of a plurality of video frames and a plurality of audio frames, into a single data stream, a known technology of division multiplexing is applied. By applying division multiplexing, a single data stream can be obtained, in which both the video data stream and the audio data stream are contained.

Further, in the above example, if the original video data stream and the original audio data stream are data streams encrypted in units of frames in the CBC mode, the original video data stream and the original audio data stream will respectively consist of encrypted video frames and encrypted audio frames. When the technology of division multiplexing is applied to integrate such two data streams, the data stream produced as a result of the division multiplexing will include 2 separate sequences of ciphertext blocks existing in an intermixed state. That is, a chunk of ciphertext blocks belonging to one encrypted frame (for instance, an encrypted audio frame) may exist in-between two chunks of ciphertext blocks belonging to the other encrypted frame (for instance, an encrypted video frame), the ciphertext blocks belonging to one encrypted frame being linked together in one chain, and the ciphertext blocks belonging to the other encrypted frame being linked together in another separate chain.

A content decrypting apparatus for decrypting such division-multiplexed data streams must be capable of decrypting data streams having a data structure in which a chunk of ciphertext blocks (hereinafter referred to as a "ciphertext chunk") belonging to a first encrypted frame (for instance, an encrypted audio frame) are disposed in between two ciphertext chunks belonging to a second encrypted frame (for instance, an encrypted video frame) which are linked together in a chain.

However, it must be noted that such division-multiplexed data streams cannot be correctly decrypted with use of a content decrypting apparatus for performing conventional data decryption in the CBC mode, in which an individual ciphertext block is decrypted using a chaining value which is obtained by performing a predetermined arithmetic processing onto another chaining value used in the decryption of a preceding ciphertext block.

Hence, the present invention provides a content decrypting apparatus capable of decrypting data streams having a data structure in which ciphertext chunks belonging to a first encrypted frame are disposed in between two chained ciphertext chunks belonging to a second encrypted frame, decryption being performed in a sequential manner beginning at the first ciphertext block of the data stream and ending at the last ciphertext block of the data stream.

### [Solution to Problem]

In order to solve the above presented problems, the present invention provides a content decrypting apparatus for sequentially decrypting a data stream including intermixture of a plurality of cipher block sequences each belonging to a first encrypted frame and a plurality of cipher block sequences each belonging to a second encrypted frame, each encrypted frame encrypted by employing a cipher block chaining method, each cipher block sequence including a plurality of cipher blocks which are linked in a cipher block chain, the content decrypting apparatus comprising: a decryption unit operable to sequentially decrypt cipher blocks in a cipher block sequence to be decrypted, while generating a plurality of chaining values used for the decryption, such that every time a cipher block is decrypted, a chaining value to be applied in decryption of the subsequent cipher block is generated; a chaining value holding unit operable to hold identifiers of encrypted frames and the chaining values in association with each other; a chaining value storing unit operable to cause the chaining value holding unit to hold, when the last cipher block in a cipher block sequence has been decrypted by the decryption unit, an identifier of the encrypted frame to which the decrypted last cipher block belongs and a chaining value generated by the decryption unit during decryption of the last cipher block in association with each other, wherein the decryption unit, in a case where the cipher block to be decrypted is the first cipher block in a cipher block sequence and a portion of an encrypted frame to which the first cipher block belongs has been decrypted in advance, refers to the chaining value holding unit and selects, as the chaining value to be used in the decryption of the first cipher block, a chaining value generated during decryption of the most recently decrypted cipher block among the cipher blocks belonging to the encrypted frame.

### [Advantageous Effects of Invention]

According to the above structure, the content decrypting apparatus pertaining to the present invention comprises a chaining value storing unit operable to cause the chaining value holding unit to hold, when the last cipher block in a cipher block sequence has been decrypted by the decryption unit, an identifier of the encrypted frame to which the decrypted last cipher block belongs and a chaining value generated by the decryption unit during decryption of the last cipher block in association with each other, wherein the decryption unit, in a case where the cipher block to be decrypted is the first cipher block in a cipher block sequence and a portion of an encrypted frame to which the first cipher block belongs has been decrypted in advance, refers to the chaining value holding unit and selects, as the chaining value to be used in the decryption of the first cipher block, a chaining value generated during decryption of the most recently decrypted cipher block among the cipher blocks belonging to the encrypted frame. Thus, the content decrypting apparatus pertaining to the present invention is capable of correctly decrypting data streams having a data structure in which ciphertext chunks belonging to a first encrypted frame are disposed in between two ciphertext chunks belonging to a second encrypted frame.

Data streams having a data structure as described above may also be correctly decrypted, for instance, with use of a decrypting apparatus performing decryption of the data stream by first extracting and decrypting each of the ciphertext chunks which belong to the first encrypted frame in a sequential manner, and then extracting and decrypting each of the ciphertext chunks which belong to the second encrypted frame again in an sequential manner, the processing of one encrypted frame being performed separately from the other. However, such decrypting apparatuses will require an extra step of separately extracting each of the ciphertext chunks belonging to the two different encrypted frames from the entire data stream, and accordingly, will also require a storage area for temporarily and separately storing the extracted ciphertext chunks with respect to the encrypted frame they belong to.

In contrast, the content decrypting apparatus of the present invention having the above-stated structure does not require the step of separately extracting each of the ciphertext chunks belonging to the two different encrypted frames from the entire data stream. At the same time, a storage area for temporarily and separately storing the extracted ciphertext chunks with respect to the encrypted frame they belong to is also unnecessary.

Further, in the content decrypting apparatus pertaining to the present invention, the chaining value holding unit may include an in-chunk chaining value holding unit for holding chaining values, and when a cipher block other than the last cipher block in a cipher block sequence has been decrypted by the decryption unit, the chaining value holding unit may overwrite the chaining value held by the in-chunk chaining value holding unit with a chaining value generated by the decryption unit during the decryption of the cipher block other than the last cipher block, and the decryption unit, when the cipher block to be decrypted is a cipher block in a cipher block sequence other than the first cipher block, may use the chaining value held by the in-chunk chaining value holding unit to decrypt the cipher block.

According to the above structure, the in-chunk chaining value holding unit stores, by overwriting, only the chaining value. Thus, the storage capacity to be allocated to the in-chunk chaining value holding unit is limited to a storage capacity necessary for storing one chaining value.

In addition, the chaining value storing unit of the content decrypting apparatus pertaining to the present invention may cause the chaining value holding unit to hold a combination of an identifier and a chaining value for each of the first encrypted frame and the second encrypted frame.

According to the above structure of the content decrypting apparatus pertaining to the present invention, the chaining value holding unit stores, by overwriting, a piece of information indicating an encrypted frame and a chaining value, with respect to each of the encrypted frames. Thus, the storage capacity to be allocated to the chaining value holding unit is limited to the storage capacity necessary for storing one piece of information indicating the encrypted frame and one chaining value for each of the encrypted frames.

Additionally, the content decrypting apparatus pertaining to the present invention may further comprise a data appending unit operable to, when a cipher block to be decrypted by the decryption unit has a smaller bit count than a predetermined bit count, generate a synthesized cipher block having the predetermined bit count by calculating a difference between the predetermined bit count and a bit count of the cipher block, and appending data having a bit count equivalent to the calculated difference to the head of the cipher block to be decrypted; a decrypted data holding unit operable to hold a cipher block decrypted by the decryption unit; and a decrypted data storing unit operable to cause the decrypted data holding unit to hold a portion of a cipher block decryopted by the decryption unit, wherein when the cipher block to be decrypted has a smaller bit count than the predetermined bit count: the data appending unit may generate the synthesized cipher block having the predetermined bit count by appending data to the cipher block to be decrypted; the decryption unit may decrypt the synthesized cipher block instead of the cipher block to be decrypted; and the decrypted data storing unit may cause the decrypted data holding unit to hold a portion of the decrypted synthesized cipher block other than the portion obtained by the decryption unit performing decryption on the data appended to the cipher block by the data appending unit.

Note that here, the "predetermined bit count" indicates a bit count of a single ciphertext block which the decryption unit of the present invention is capable of decrypting.

According to the above structure of the content decrypting apparatus pertaining to the present invention, when the ciphertext block to be decrypted is a "partial" ciphertext block, i.e. a ciphertext block which does not have a predetermined bit count due to having dropped a portion of the data it had originally possessed, the decrypting unit appends supplementary data to such partial ciphertext blocks to generate a synthesized ciphertext block having the predetermined bit count, and decrypts the synthesized ciphertext block. As a result of the decryption, a synthesized plaintext block is obtained. The decrypted data holding unit then, removes the portion of the synthesized plaintext block which corresponds to the supplementary data appended by the decrypting unit, and stores the synthesized plaintext block from which supplementary data has been removed. Hence, the content decrypting apparatus of the present invention is capable of decrypting ciphertext blocks not having the predetermined bit count, and further correctly storing the result of the decryption to the decrypted data holding unit.

### [Brief Description of Drawings]

Fig. 1 is a block diagram showing the block structure of a playback device 1000.
Fig. 2 is a diagram showing the data structure of content.
Fig. 3 is a diagram showing the data structure of a chunk 310.
Fig. 4 is a block diagram showing the functional structure of a content decrypting apparatus 2000.
Fig. 5 is a diagram showing information held by a key storing unit 214.
Fig. 6 is a diagram showing information held by an inter-chunk chaining value holding unit 216.
Fig. 7 is a block diagram showing the functional structure of a cryptographic unit 222.
Fig. 8 is a flowchart showing content decrypting operations of the content decrypting apparatus 2000.
Fig. 9 is a diagram showing the data structure of a chunk 1050.
Fig. 10 is a diagram, showing information contained in a content header.
Fig. 11 is a block diagram showing the functional structure of a content decrypting apparatus 3000.
Fig. 12 is a flowchart showing content decrypting operations of the content decrypting apparatus 3000.
Figs. 13A and 13B are diagrams showing the data structure of content data.
Fig. 14 is a block diagram showing the functional structure of a content decrypting apparatus 4000.
Fig. 15 is a diagram showing information held by an inter-chunk chaining value holding unit 1316.
Fig. 16 is a diagram showing operations of a pre-processing unit 1301, the cryptographic unit 222, and a post-processing unit 1302, in a case where a "partial" ciphertext block lacking a latter portion thereof is decrypted.
Fig. 17 is a diagram showing operations of the pre-processing unit 1301, the cryptographic unit 222, and the post-processing unit 1302, in a case where a "partial" ciphertext block lacking a former portion thereof is decrypted.
Fig. 18 is a diagram showing the operations of the pre-processing unit 1301, the cryptographic unit 222, and the post-processing unit 1302, in a case where a "complete" ciphertext block is decrypted.
Fig. 19 is the 1st of 2 flowcharts showing content decrypting operations of the content decrypting apparatus 4000.
Fig. 20 is the 2nd of 2 flowcharts showing content decrypting operations of the content decrypting unit 4000.
Fig. 21 is a diagram showing the data structure of a chunk 2250.
Fig. 22 is a block diagram showing the functional structure of a content decrypting apparatus 5000.
Fig. 23 is a diagram showing information held by a key storing unit 2114.
Fig. 24 is a flowchart showing content decrypting operations of the content decrypting apparatus 5000.
Fig. 25 is a block diagram showing the functional structure of a content decrypting apparatus 6000.
Fig. 26 is a diagram showing information held by a frame number accumulation unit 2522.
Fig. 27 is a diagram showing information held by a cryptographic information accumulation unit 2530.
Fig. 28 is the 1st of 2 flowcharts showing content decrypting operations of the content decrypting unit 6000.
Fig. 29 is the 2nd of 2 flowcharts showing content decrypting operations of the content decrypting unit 6000.
Fig. 30 is a block diagram showing the hardware structure of the playback device 1000.

### [Description of Embodiments]

### [Embodiment 1]

In the following, description will be made on a content decrypting apparatus for decrypting content having been encrypted in the ciphertext block chaining mode (CBC mode), as a preferred embodiment of the content decrypting apparatus pertaining to the present invention.

Encrypted content as dealt with hereinafter is a data stream obtained by performing division multiplexing onto an encrypted video data stream and an encrypted audio data stream, the encrypted video data stream obtained by encrypting, in units of frames, a video data stream including a plurality of video frames and the encrypted audio data stream obtained by encrypting, in units of frames, an audio data stream including a plurality of audio frames.

The content decrypting apparatus is capable of correctly decrypting data streams having a data structure in which ciphertext chunks belonging to a first encrypted frame (for instance, an encrypted video frame) are disposed in between two ciphertext chunks belonging to a second encrypted frame (for instance, an encrypted audio frame) which are linked together in a chain.

The following describes the structure of the content decrypting apparatus of the present embodiment, with reference to the accompanying drawings.

### <Structure>

### <Playback Device 1000>

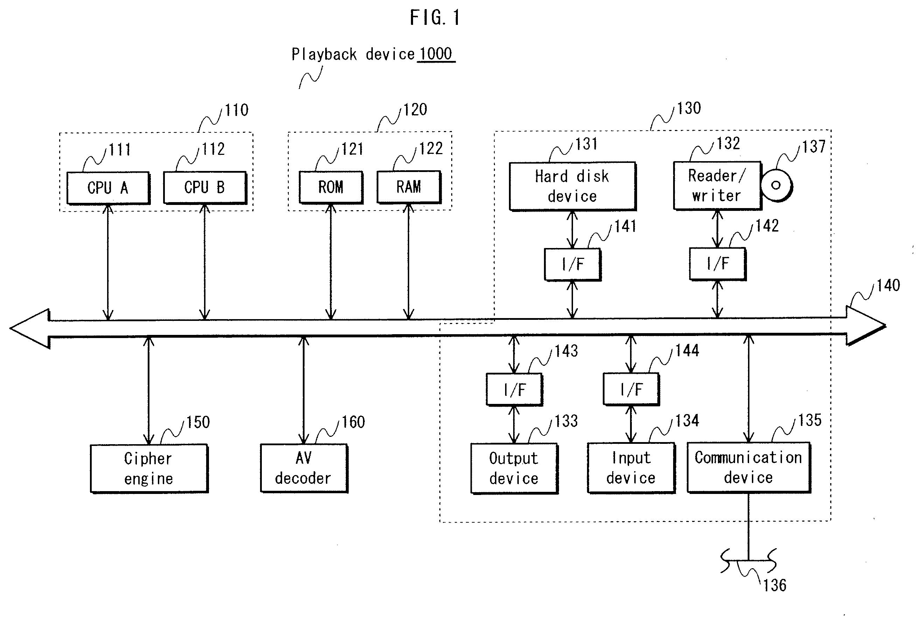

Fig. 1 is a block diagram showing a block structure of a playback device 1000 which is provided with a content decrypting apparatus 2000 of the present embodiment.

The playback device 1000 is a personal computer which includes a CPU (Central Processing Unit) block 110, a memory block 120, a peripheral device block 130, a bus line 140, a cipher engine 150, and an AV decoder 160.

The CPU block 110 is composed of 2 CPUs, a CPUA 111 and a CPUB 112.

The CPUA 111 and the CPUB 112 are each connected to the bus line 140, and realize various functions by executing respective programs stored onto the memory block 120 and utilizing the memory block 120, the peripheral device block 120, the cipher engine 150, and the AV decoder 160 in the execution of such functions. The functions to be realized by the CPUA 111 and the CPUB 112 include reading encrypted data streams from a recording medium, decrypting encrypted data streams, and decoding encoded data streams.

In order to realize the above-mentioned functions, the CPUA 111 and the CPUB 112 operate in alignment and in parallel with each other.

The memory block 120 is composed of a ROM (Read Only Memory) 121 and a RAM (Random Access Memory) 122.

The ROM 121 is connected to the bus line 140, and has stored thereon a program defining the operations of the CPUA 111, a program defining the operations of the CPUB 112, and data to be accessed and utilized by the CPUA 111 and the CPUB 112.

The RAM 122 is connected to the bus line 140, and is used as a temporary storage location for data generated when the CPUA 111 and the CPUB 112 execute respective programs, and also as a temporary storage location for data read from the peripheral device block 130.

The peripheral device block 130 includes a hard disk device 131, a hard disk device interface 141, a reader/writer 132, a reader/writer interface 142, an output device 133, an output device interface 143, an input device 134, an input device interface 144, and a communication device 135.

The cipher engine 150 is a DSP (Digital Signal Processor) which performs decryption of encrypted data. The cipher engine 150 is controlled by the CPUA 111 and the CPUB 112, and is connected to the bus line 140.

The AV decoder 160 is a DSP which decodes encoded video data and encoded audio data by performing MPEG (Moving Picture Experts Group) 2 decoding, MPEG-4 decoding, and MPEG-4 AVC decoding. The AV decoder 160 is controlled by the CPUA 111 and the CPUB 112.

The playback device 1000 outputs the results of the decoding performed by the AV decoder 160 to the output device 133, and thereby reproduces content.

The hard disk device 131 performs reading of content written to an internal hard disk included therein, as well as writing content to the internal hard disk. The hard disk device 131 is controlled by the CPUA 111 and the CPUB 112 and is connected to the bus line 140 via the hard disk device interface 141.

The hard disk device interface 141 serves as a mediator of signals exchanged between the hard disk device 131 and the bus line 140.

The reader/writer 132 is controlled by the CPUA 111 and the CPUB 112, and performs writing of content to an external recording medium 137 as well as reading of contents written to the external recording medium 137. The reader/writer 132 is connected to the bus line 140 via the reader/writer interface 142.

Here, the external recording medium 137 can be such media as: a DVD (Digital Versatile Disc), a DVD-R, a DVD-RAM, a BD(Blu-ray Disc), a BD-R, a BD-RE, and so on. The reader/writer 132 is capable of writing data onto and reading data from such external recording media as listed above.

The reader/writer interface 142 serves as a mediator of signals exchanged between the reader/writer 132 and the bus line 140.

The communication device 135 is connected to the bus line 140 and obtains content via an external transmission medium 136. More specifically, the communication device 135 obtains contents from external content servers, content-distributing websites on the internet and so on.

Here, the external transmission medium 136 can be an optical communication network, a telecommunication line, broadcast waves and the like. The communication device 135 is capable of receiving signals from such external transmission media.

Further, the content obtained by the communication device 135 is written to either the external recording medium 137, the internal hard disk of the hard disk device 131, or the RAM 122.

The output device 133 outputs videos and audios. More specifically, the output device 133 outputs video data and audio data decoded by the AV decoder 160. The output device 133 is connected to the bus line 140 via the output device interface 143, and includes an LCD (Liquid Crystal Display) and a speaker.

The output device interface 143 serves as a mediator of signals exchanged between the output device 133 and the bus line 140.

The input device 134 includes a keyboard and a mouse both of which are for receiving user operations, and receives operation commands input by the user for controlling the playback device 1000. The input device 134 is connected to the bus line 140 via the input device interface 144.

The input device interface 144 serves as a mediator of signals exchanged between the input device 134 and the bus line 140.

The bus line 140 is a device enabling data communication between the components connected thereto, the components connected to the bus line 140 being: the CPUA 111, the CPUB 112, the ROM 121, the RAM 122, the cipher engine 150, the AV decoder 160, the communication device 135, the hard disk device interface 141, the reader/writer interface 142, the output device interface 143, and the input device interface 144.

The playback device 1000 having the above structure executes playback of contents written to either the external recording medium 137, the internal hard disk of the hard disk device 131, or the RAM 122, by causing the CPUA 111 or the CPUB 112 to execute programs respectively stored onto the ROM 121 and the RAM 122.

### <Content Data Structure>

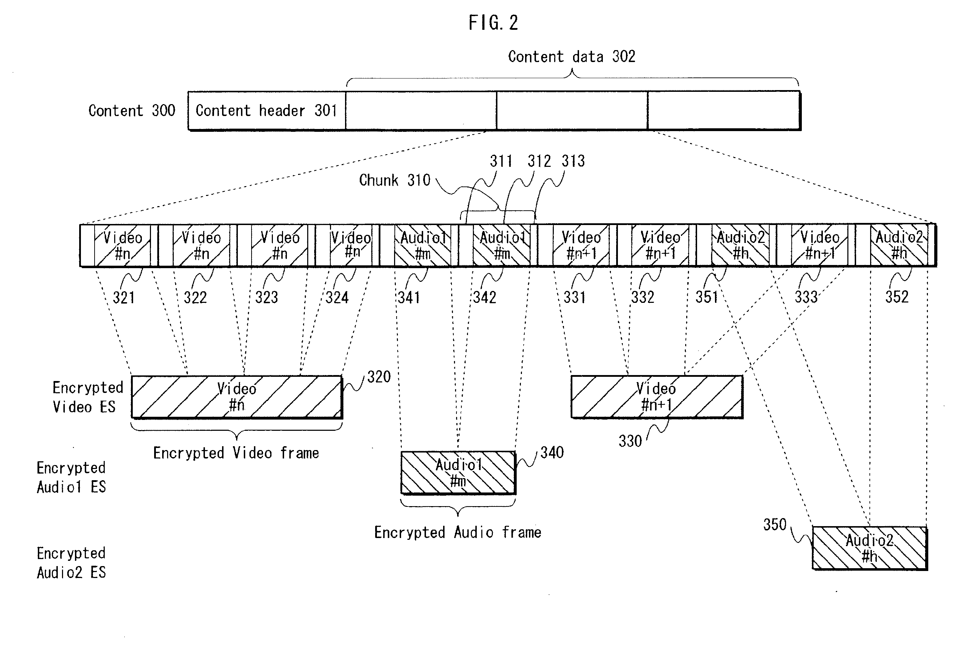

Fig. 2 is a diagram showing the data structure of content 300 to be decrypted by the content decrypting apparatus 2000 of Embodiment 1.

The content 300 includes content data 302 and a content header 301. The content data 302 is a single data stream obtained by performing division multiplexing on a combination of a Video ES (Elementary Stream), an Audio 1 ES, and an Audio 2 ES. The Video ES is obtained by encrypting a video stream which has been obtained by encoding video data. The Audio 1 ES is obtained by encrypting an audio stream which has been obtained by encoding Japanese language audio data. The Audio 2 ES is obtained by encrypting an audio stream which has been obtained by encoding an English language audio data. The content header 301 holds information on the content 300.

In detail, the Video ES is a data stream obtained by encrypting, in the ciphertext block chaining mode (the CBC mode), each of multiple video frames constituting the video data, the video frames each corresponding to video data equivalent to one screen. It is assumed herein that the original video data has been encoded applying the MPEG-4 AVC standard.

Further, each of the encrypted video frames corresponds to an independent ciphertext block sequence. In other words, ciphertext block sequences are concluded in units of single video frames, and do not span between multiple, separate video frames.

In addition, a common initialization vector and a common key are to be applied in the decryption of all video frames. The initialization vector is a chaining value used for decrypting the first ciphertext block of each ciphertext block sequence, whereas the key is used for decrypting each of the multiple ciphertext blocks constituting a ciphertext block sequence.

Similarly, each of the Audio 1 ES and the Audio 2 ES is a data stream obtained by encrypting, in the ciphertext block chaining mode (the CBC mode), each of multiple audio frames constituting the original audio data. It is assumed herein that each of the original audio data has been encoded applying the MPEG-4 AVC standard.

Further, each of the encrypted audio frames corresponds to an independent ciphertext block sequence. In other words, ciphertext block sequences are concluded in units of single audio frames, and do not span between multiple, separate audio frames.

A common initialization vector and a common key are to be applied in the decryption of all audio frames belonging to the Audio 1 ES, while another common initialization vector and another common key are to be applied in the decryption of all audio frames belonging to the Audio 2 ES. That is, although one initialization vector and one key are to be used in the decryption of all frames included in one stream, different initialization vectors and different keys should be applied for each of the Audio 1 ES and the Audio 2 ES.

The content data 302 has a data structure in which a plurality of chunks 310 are arranged to compose a sequence. Each of the chunks 310 is composed of a chunk header 311, chunk data 312, and a padding 313.

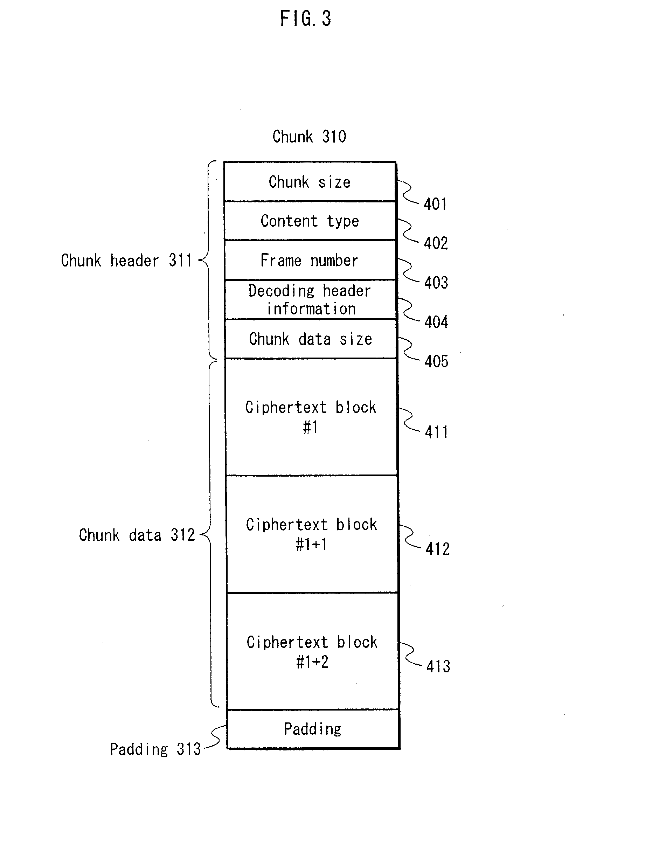

Fig. 3 is a diagram showing the data structure of the chunk 310.

The chunk header 311 is an unencrypted data piece having a fixed length, and includes a chunk size 401 indicating the size of the chunk, a content type 402 indicating a content type to which the chunk belongs to, a frame number 403 indicating the frame number to which the chunk belongs to, a decoding header information 404 to be used in decoding the ESs, and chunk data size 405 indicating the size of the chunk data 312.

Here, the content type 402 indicates either "Video", "Audio 1", or "Audio 2". The indication of "Video" shows that the chunk belongs to the Video ES. Similarly, the indication of "Audio 1" shows that the chunk belongs to the Audio 1 ES, and the indication of "Audio 2" shows that the chunk belongs to the Audio 2 ES.

Further, the components of the chunk header 311: the chunk size 401, the content type 402, the frame number 403, and the decoding header information 404, have fixed bit lengths and are arranged in a fixed order.

The chunk data 312 is a ciphertext block sequence composed of ciphertext blocks 411-413, which are arranged in the order in which encryption in the CBC mode is performed.

For instance, if the AES (Advanced Encryption Standard) algorithm is employed in the encryption, a ciphertext block is the basic unit produced as a result of the encryption in the CTR mode, a single ciphertext block having a bit count of 128 bits.

Here, a ciphertext block is generated by exclusive-ORing a 128-bit plaintext block with a 128-bit encrypted chaining value. The encrypted chaining value is obtained by encrypting a 128-bit chaining value with the use of a 128-bit key, by applying such encryption algorithm as the AES algorithm thereto. Further, each of the ciphertext blocks is obtained by encryption of either one of the Video frame, the Audio 1 frame, and the Audio 2 frame.

The padding 313 is unencrypted data that is appended for the purpose of adjusting the data size of the chunk 310.

### <Content Decoding Apparatus2000>

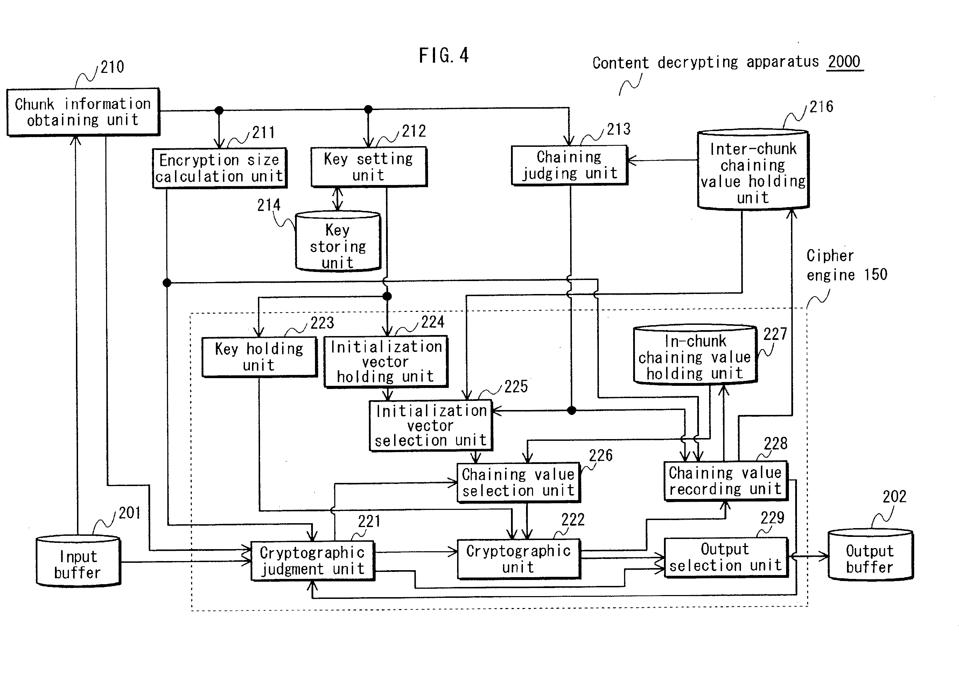

Fig. 4 is a block diagram showing the functional structure of the content decrypting apparatus 2000 which is realized with use of the playback device 1000.

The content decrypting apparatus 2000 decrypts encrypted content by causing the CPUA 111 and the CPUB 112 to execute respective programs stored onto the memory block 120. The CPUA 111 and the CPUB 112 utilize the peripheral device block 130, the bus line 140, the cipher engine 150 and so on in the decryption of the content. Further, the content decrypting apparatus 2000 outputs the decrypted content to the AV decoder 160.

The content decrypting apparatus 2000 includes an input buffer 201, an output buffer 202, a key storing unit 214, an inter-chunk chaining value holding unit 216, a chunk information obtaining unit 210, an encryption size calculation unit 211, a key setting unit 212, a chaining judging unit 213, and the cipher engine 150. Each of the constituents have functions as described in the following: the input buffer 201 temporarily holds a chunk to be decrypted; the output buffer 202 temporarily holds a decrypted chunk; the key storing unit 214 stores a key and an initialization vector; the inter-chunk chaining value holding unit 216 stores chaining values linking two chunks; the chunk information obtaining unit 210 obtains information from the chunk header 311; the encryption size calculation unit 211 calculates a start address of the chunk data 312 and a start address of the padding 313; the key setting unit 212 outputs the key and the initialization vector to the cipher engine 150; and the chaining judging unit 213 judges whether chaining is continuing on between multiple chunks.

The input buffer 201 is a storage area for temporarily storing a portion of the content to be decrypted by the cipher engine 150, and is mounted as a part of the memory block 120.

The input buffer 210 stores data in units of the content header 301 or in units of the chunk 310. In detail, the CPUA 111 or the CPUB 112 causes the input buffer 210 to store a portion of the content, by overwriting a portion of the content previously stored thereto. Portions of the content are sequentially stored and overwritten according to the order in which they are arranged in the content 300.

The output buffer 202 is a storage area for temporarily storing a portion of the content decrypted by the cipher engine 150, prior to the outputting thereof to the AV decoder 160. The output buffer 202 is mounted as a part of the memory block 120.

The chunk information obtaining unit 210 obtains a start address of the chunk held by the input buffer 201, and further obtains, the chunk size 401, the chunk data size 405, the content type 402, and the frame number 403 from the chunk header 311. After obtaining such information, the chunk information obtaining unit 210 outputs the start address of the chunk, the chunk size 401, and the chunk data size 405 to the encryption size calculation unit 211, outputs the content type 402 to the key setting unit 212, and outputs the content type 402 and the frame number 403 to the chaining judging unit 213.

Additionally, when the CPUA 111 or the CPUB 112 writes a content header 301 to the input buffer 201, the chunk information obtaining unit 210 outputs a content header signal indicating that the data held by the input buffer 201 is the content header 301, to the cipher engine 150.

Following receipt of the start address of the chunk, the chunk size 401, and the chunk data size 405 from the chunk information obtaining unit 220, the encryption size calculation unit 211 calculates and outputs the start address of the chunk data 312, the start address of the padding 313, an end address of the chunk, and a ciphertext block number indicating the number of ciphertext blocks contained in the chunk data 312, to the cipher engine unit 150.

The start address of the chunk data 312 is calculated by adding a fixed size of the chunk header 311 to the start address of the chunk. The start address of the padding 313 is calculated by adding the chunk data size 405 to a start address of the chunk header 311. The end address of the chunk is calculated by adding the chunk size 401 to the start address of the chunk. The ciphertext block number is calculated by dividing the chunk data size 405 by the unit bit count "128" of a single ciphertext block.

The key storing unit 214 is a storage area for storing combinations of a content type, a key, and an initialization vector in association, and is mounted as a part of the memory block 120.

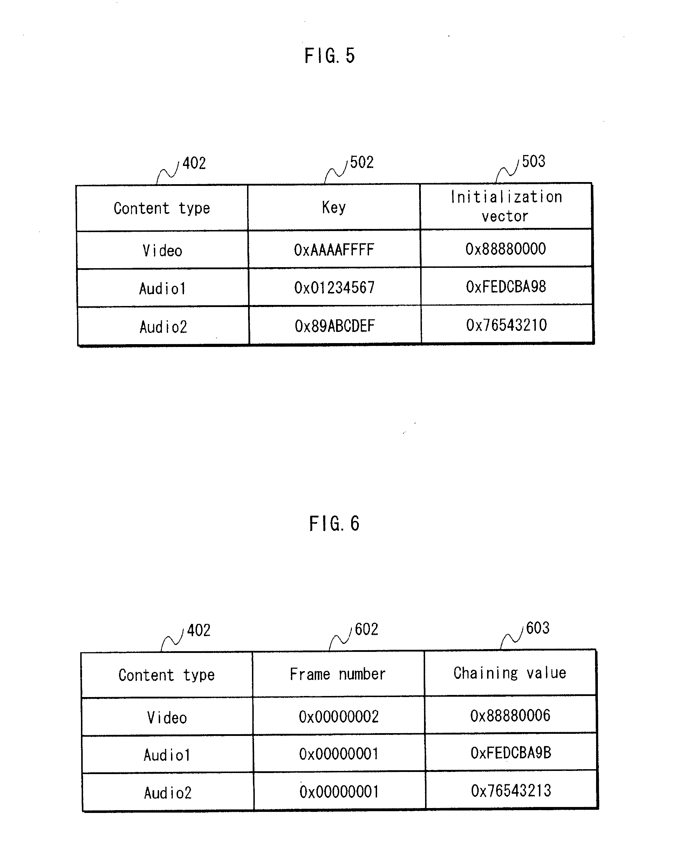

Fig. 5 is a diagram showing the information stored onto the key storing unit 214.

As is shown in Fig. 5, the key storing unit 214 is provided beforehand with a combination of a key and an initialization vector in association with each of the content types 402. The keys and the initialization vectors are respectively listed in rows 502 and 503, and are used for decryption of ciphertext blocks.

Further, both the keys listed in row 502 and the initialization vectors listed in row 503 have bit counts of 128 bits.

Additionally, the initialization vector is a chaining value used to decrypt the first ciphertext block of a chain in the decryption of ciphertext blocks encrypted in the CBC mode.

The key setting unit 212 receives the content type 402 from the chunk information obtaining unit 210 and in response, reads, from the key storing unit 214, the key listed in row 502 and initialization vector listed in row 503 stored in association with the received content type 402. The key and the initialization vector are then output to the cipher engine 150.

The inter-chunk chaining value holding unit 216 is a storage area for storing combinations of a content type, a frame number, and a chaining value in association, and is mounted as a part of the memory block 120.

Fig. 6 is a diagram showing the information stored onto the inter-chunk chaining value holding unit 216.

As is shown in Fig. 6, the inter-chunk chaining value holding unit 216 stores a combination of a frame number and a chaining value in association with each of the content types 402. The frame numbers and chaining values are respectively listed in rows 602 and 603.

Each of the frame numbers listed in row 602 indicates the most recently decrypted frame of the corresponding content type 402. Each of the chaining values listed in row 603 indicates a chaining value calculated when the last ciphertext block of the chunk was decrypted, the chunk here being the most recently decrypted chunk belonging to the frame number 602.

The chaining values listed in row 603 have bit counts of 128 bits.

Note that the combination of a frame number listed in row 602 and a chaining value li sted in row 603 is overwr itten by the cipher engine 150 wit h respect to the associated content type 402.

Following receipt of the combination of the content type 402 and the frame number 403 from the chunk information obtaining unit 210, the chaining judging unit 213 judges whether the combination of the content type 402 and the frame number 403 received from the chunk information obtaining unit 210 is stored onto the inter-chunk chaining value holding unit 216 in association. If yes, the chaining judging unit 213 judges that the chunk held by the input buffer 201 is in chaining. If no, the chaining judging unit 213 judges that the chunk held by the input buffer 201 is not in chaining.

Further, the chaining judging unit 213 outputs the combination of the content type 402 and the frame number 403 to the cipher engine 150, and when judging that the chunk is in chaining, outputs a chaining continuance signal indicating that chaining is in continuance, to the cipher engine 150. On the other hand, when judging that the chunk is not in chaining, outputs a chaining termination signal indicating that chaining is not in continuance, to the cipher engine 150.

The cipher engine 150 reads the chunk held by the input buffer 201, decrypts the chunk, and writes the decrypted chunk to the output buffer 202. The chunk to be read from the input buffer 201 is determined according to the content header signal received from the chunk information obtaining unit 210, the key listed in row 502 and the initialization vector listed in row 503 received from the key setting unit 212, the start address of the chunk data 312, the start address of the padding 313, the end address of the chunk, and the ciphertext block number included in the chunk data 312 received from the encryption size calculation unit 211, and the content type 402, the frame number 403, and the chaining continuance signal or the chaining termination signal received from the chaining judging unit 213.

The cipher engine 150 includes a cryptographic judgment unit 221, a cryptographic unit 222, a key holding unit 223, an initialization vector holding unit 224, an initialization vector selection unit 225, a chaining value selection unit 226, an in-chunk chaining value holding unit 227, a chaining value recording unit 228, and an output selection unit 229. Each of the components have the following functions: the cryptographic judgment unit 221 reads the chunk data 312 from the chunk held by the input buffer 201 and outputs the chunk data 312; the cryptographic unit 222 decrypts the chunk data 312 in units of ciphertext blocks; the key holding unit 223 stores the key; the initialization vector holding unit 224 stores the initialization vector; the initialization vector selection unit 225 selects either one of the initialization vector and the chaining value; the chaining value selection unit 226 selects the chaining value to be used by the cryptographic unit 222; the in-chunk chaining value holding unit 227 stores the chaining value; the chaining value recording unit 228 stores the chaining value output by the cryptographic unit 222 to either one of the in-chunk chaining value holding unit 227 and the inter-chunk chaining value holding unit 216; and the output selection unit 229 writes the chunk data decrypted, in units of ciphertext blocks, by the cryptographic unit 222 to the output buffer 202.

The cryptographic judgment unit 221, according to the start address of the chunk, the start address of the chunk data 312, the start address of the padding 313, and the end address of the chunk output from the encryption size calculation unit 211, reads the chunk header 311 and the padding 313 from the chunk held by the input buffer 201, outputs the chunk header 311 and the padding 313 to the output selection unit 229. In addition, the cryptographic judgment unit 221 reads the chunk data 312 from the chunk held by the input buffer 201 and outputs the chunk data 312 in units of ciphertext blocks to the cryptographic unit 222. When the ciphertext block to be output to the cryptographic unit 222 is the first ciphertext block of the chunk data, the cryptographic judgment unit 221 outputs an initialization vector selection signal to the chaining value selection unit 226. When the ciphertext block to be output to the cryptographic unit 222 is a ciphertext block besides the first ciphertext block of the chunk data, the cryptographic judgment unit 221 outputs a chaining value selection signal to the chaining value selection unit 226.

The judgment of whether the ciphertext block is the first ciphertext block of the chunk or not is made according to start address of the chunk data.

Here, the point of time where the first ciphertext block of the chunk data is output to the cryptographic unit 222 is when the start address of the chunk data 312 is input from the encryption size calculation unit 211. The point of time where a ciphertext block besides the first ciphertext block of the chunk is output to the cryptographic unit 222 is when a ciphertext block request signal is received from the chaining value recording unit 228.

Additionally, when receiving the content header signal from the chunk information obtaining unit 210, the cryptographic judgment unit 221 reads the content header 301 held by the input buffer 201 and outputs the content header 301 to the output selection unit 229.

The key holding unit 223 overwrites the key stored thereto and repeatedly outputs the key currently in hold to the cryptographic unit 222, every time a new key is input from the key setting unit 212.

The initialization vector holding unit 224 overwrites the initialization vector stored thereto and repeatedly outputs the initialization vector currently in hold to the initialization vector selection unit 225, every time a new initialization vector is input from the key setting unit 212.

Following receipt of a combination of the chaining continuance signal and the content type 402 from the chaining judging unit 213, the initialization vector selection unit 225 reads a chaining value from the inter-chunk chaining value holding unit 216 which corresponds to the content type 402 received. Following this, the initialization vector selection unit 225 outputs the chaining value read from the inter-chunk chaining value holding unit 216 to the chaining value selection unit 226. Following receipt of the chaining termination signal from the chaining judging unit 213, the initialization vector selection unit 225 reads an initialization vector held by the initialization vector holding unit 224 and outputs the initialization vector to the chaining value selection unit 226.

The in-chunk chaining value holding unit 227 is a storage area for storing a chaining value to be overwritten by the chaining value recording unit 228.

When receiving an initialization vector selection signal from the cryptographic judgment unit 221, the chaining value selection unit 226 outputs the initialization vector or the chaining value received from the initialization vector selection unit 225 to the cryptographic unit 222, and when receiving a chaining value selection signal from the cryptographic judgment unit 221, outputs the chaining value held by the chaining value holding unit 227 to the cryptographic unit 222.

The chaining value recording unit 228 receives the ciphertext block number from the encryption size calculation unit 211, the content type and the frame number from the chaining judging unit 213, and the chaining value from the cryptographic unit 222. When receiving the chaining value from the cryptographic unit 222, the chaining value recording unit 228 stores the chaining value received to either the inter-chunk chaining value holding unit 216 or the in-chunk chaining value holding unit 227.

Further, when the chaining value received from the cryptographic unit 222 is a chaining value output when the last ciphertext block of the chunk is decrypted, the chaining value recording unit 228 stores the chaining value, by overwriting, to the inter-chunk chaining value holding unit 216 in association with the content type and frame number received from the chaining judging unit 213. On the other hand, when the chaining value received from the cryptographic unit 222 is a chaining value output when a ciphertext block besides the last ciphertext block of the chunk is decrypted, the chaining value recording unit 228 stores the chaining value, by overwriting, to the in-chunk chaining value holding unit 227 and further outputs the ciphertext block request signal to the cryptographic judgment unit 221.

The chaining value recording unit 228 is provided with a chaining value number counter for counting the number of chaining values input thereto. The chaining value number counter is used to judge whether the chaining value received from the cryptographic unit 222 is a ciphertext block output when the last ciphertext block of the chunk is decrypted thereby.

The chaining value number counter is reset every time a ciphertext block number is input from the encryption size calculation unit 211.

When receiving a chaining value from the cryptographic unit 222, the chaining value recording unit 228 increments the chaining value number counted by the chaining value number counter by "1". Further, when the incremented chaining value number is smaller than the ciphertext block number input from the encryption size calculation unit 211, the chaining value recording unit 228 judges that the chaining value was output when a ciphertext block besides the last ciphertext block of the chunk was decrypted. When the incremented chaining number is equivalent to the ciphertext block number input from the encryption size calculation unit 211, the chaining value recording unit 228 judges that the chaining value was output when the last ciphertext block of the chunk was decrypted.

The output selection unit 229 writes, to the output buffer 202, the chunk header 311, the padding 313, and the content header 301 received from the cryptographic judgment unit 221, and the plaintext blocks received in units of plaintext blocks from the cryptographic unit 222.

The cryptographic unit 222 decrypts ciphertext blocks output from the cryptographic judgment unit 221 in the CBC mode, utilizing the key held by the key holding unit 223 and either one of the initialization vector and the chaining value received from the chaining value selection unit 226. At the same time as performing the decryption of ciphertext blocks, the cryptographic unit 222 also calculates and outputs a chaining value to be applied to the subsequent ciphertext block.

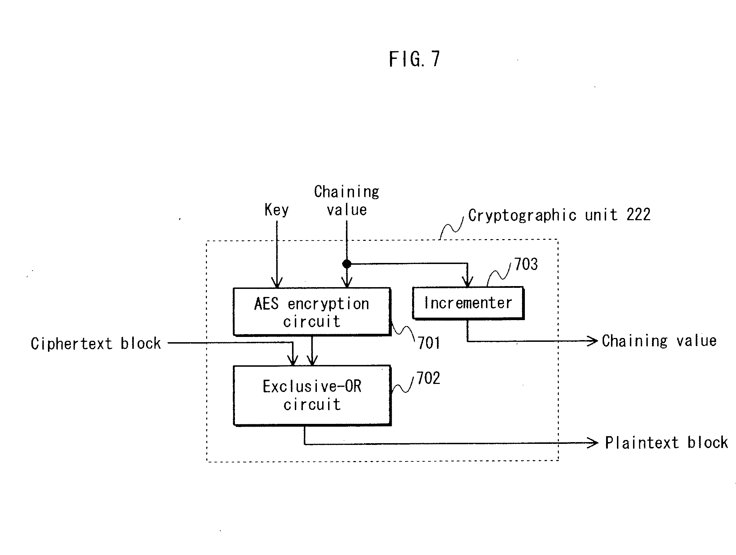

Fig. 7 is a block diagram showing the functional structure of the cryptographic unit 222.

More specifically, the cryptographic unit 222 includes an AES encryption circuit 701, an incrementer 703, and an exclusive-OR circuit 702, and decrypts ciphertext blocks encrypted in the CTR mode. The AES encryption circuit 701 encrypts a chaining value input and outputs an encrypted chaining value. The incrementer 703 generates a chaining value to be applied in the decryption of the subsequent ciphertext block according to the chaining value input. The exclusive-OR circuit 702 outputs a plaintext block, which has been obtained by performing decryption on a ciphertext block and the encrypted chaining value.

The AES encryption circuit 701 performs AES encryption on a 128-bit chaining value using a 128-bit key, and generates a 128-bit encrypted chaining value. The obtained encrypted chaining value is output to the exclusive-OR circuit 702.

The incrementer 703 increments the lower 32 bits of the chaining value received by "1", and thereby calculates the chaining value to be applied in the decryption of a subsequent ciphertext block.

In cases where the lower 32 bits of the chaining value overflows as a result of the incrementing, the incrementer 703 sets the lower 32 bits of the chaining value to "0x00", and thus, the upper 96 bits of the chaining value remains uninfluenced.

The exclusive-OR circuit 702 performs bit-by-bit XOR-ing on the 128-bit encrypted chaining value received from the AES encryption unit 701 and the 128-bit ciphertext block received from the cryptographic judgment unit 221.

The content decrypting apparatus 2000 having the above-described structure stores the chaining value calculated when the cipher engine 150 decrypts the last ciphertext block of the chunk to the inter-chunk chaining value holding unit 216, in association with the content type and the frame number.

Additionally, in a case where the cipher engine unit 150 is to decrypt the first ciphertext block of the chunk and when a chaining value stored in association with the content type and the frame number of the chunk exists in the inter-chunk chaining value holding unit 216, the content decrypting apparatus 2000 judges that chaining continues on to the chunk. In such a case, the content decrypting apparatus 2000 decrypts the first ciphertext block of the chunk according to the chaining value stored in the inter-chunk chaining value holding unit 216 in association with the content type and frame number of the chunk. In contrast, when a chaining value stored in association with the content type and the frame number of the chunk does not exist in the inter-chunk chaining value holding unit 216, the content decrypting apparatus 2000 judges that chaining does not continue on to the chunk, and decrypts the first ciphertext block of the chunk according to the initialization vector corresponding to the content type of the chunk.

Further, the content decrypting apparatus 2000 decrypts ciphertext blocks according to the chaining value held by the in-chunk chaining value holding unit 227 when the cipher engine 150 is to decrypt ciphertext blocks besides the first ciphertext block of the chunk.

In the following, description will be made on the details of the operations of the content decrypting apparatus 2000, with reference to accompanying drawings.

### <Operations>

When playback processing of content is launched by the playback device 1000, first the CPUA 111 or the CPUB 112 writes a content header 301 of the content to be decrypted to the input buffer 201. The content to be decrypted is recorded onto the external recording medium 137, the internal hard disk of the hard disk device 131, or the RAM 122.

From this point and on, the CPUA 111 or the CPUB 112 writes chunks constituting the content data to the input buffer 201, starting from the first chunk and ending at the final chunk.

When the content header 301 has been written to the input buffer 201, the content decrypting apparatus 2000 launches content decrypting processing.

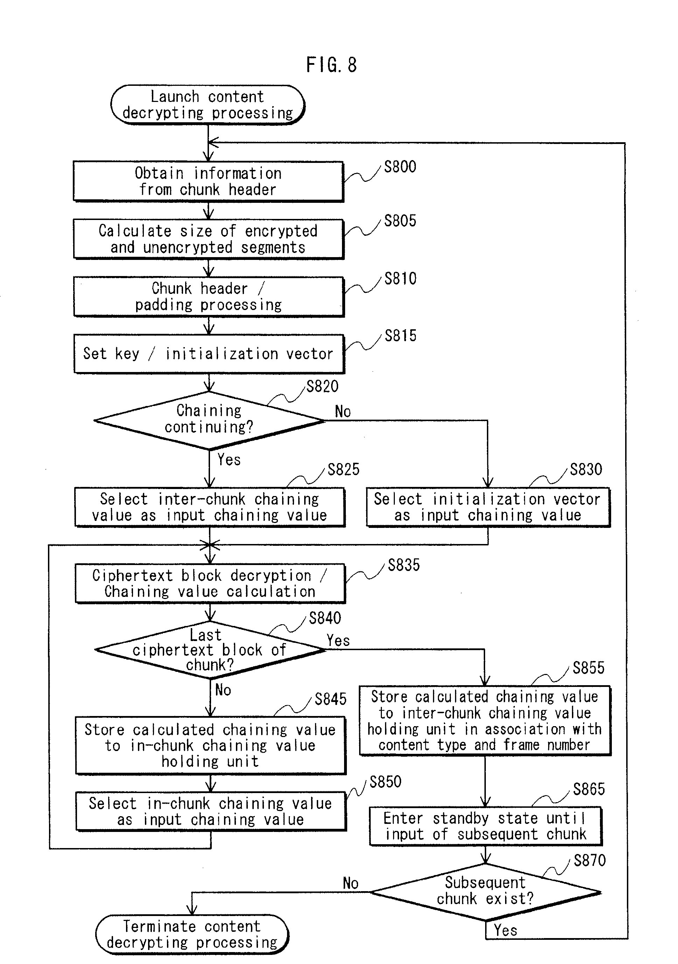

Fig. 8 is a flowchart showing the content decrypting processing performed by the content decrypting apparatus 2000.

When the content decrypting apparatus 2000 launches the content decrypting processing, the chunk information obtaining unit 210 outputs a content header signal to the cryptographic judgment unit 221.

Following receipt of the content header signal from the chunk information obtaining unit 210, the cryptographic judgment unit 221 reads the content header 301 from the input buffer 201, and outputs the content header 301 to the output selection unit 229. The output selection unit 229 writes the content header 301 to the output buffer 202.

When a chunk has been written to the input buffer 201 by the CPUA 111 or the CPUB 112, the chunk information obtaining unit 210 obtains the start address of the chunk held by the input buffer 201. Further, the chunk information obtaining unit 210 obtains the chunk size 401, the chunk data size 405, the content type 402, and the frame number 403 from the chunk header 311 (Step S800). Following receipt of such information, the chunk information obtaining unit 210 outputs the start address of the chunk, the chunk size 401, and the chunk data size 405 to the encryption size calculation unit 211, outputs the content type 402 to the key setting unit 212, and outputs the content type 402 and the frame number 403 to the chaining judging unit 213.

Following receipt of the start address of the chunk, the chunk size 401, and the chunk data size 405 from the chunk information obtaining unit 210, the encryption size calculation unit 211 calculates the start address of the padding 313, the end address of the chunk, and the ciphertext block number indicating the number of ciphertext blocks contained in the chunk data 312 (Step S805). Following the calculation, the encryption size calculation unit 211 outputs the start address of the chunk, the start address of the padding 313, and the end address of the chunk to the cryptographic judgment unit 221, and outputs the ciphertext block number to the chaining value recording unit 228.

The chaining value recording unit 228 resets the chaining value number counted by the chaining value number counter when receiving the ciphertext block number from the encryption size calculation unit 211.

Following receipt of the start address of the chunk, the start address of the padding 313, and the end address of the chunk from the encryption size calculation unit 211, the cryptographic judgment unit 221 reads the chunk header 311 and the padding 313 from the input buffer 201 and outputs the chunk header 311 and the padding 313 to the output selection unit 229. The output selection unit 229 writes the chunk header 311 and the padding 131 to the output buffer 202 (Step S810), and outputs an initialization vector selection signal to the chaining value selection unit 226.

Following receipt of the content type 402 from the chunk information obtaining unit 210, the key setting unit 212 reads, from the key storing unit 214, the key listed in row 502 and the initialization vector listed in row 503 in association with the content type 402. Then the key setting unit 212 outputs the key to the key holding unit 223, and outputs the initialization vector to the initialization vector holding unit 224. The key storing unit 214 stores the key by overwriting, and the initialization vector holding unit 224 similarly stores the initialization vector by overwriting (Step S815).

Following receipt of the content type 402 and the frame number 403 from the chunk information obtaining unit 210, the chaining judging unit 213 judges whether or not the chunk held by the input buffer 201 is in chaining. In order to make this judgment, the chaining judging unit 213 checks whether a combination of the content type 402 and the frame number 403 is stored in the inter-chunk chaining value holding unit 216 in association (Step S820). When the combination of the content type 402 and the frame number 403 is stored in association, the chaining judging unit 213 judges that the chunk held by the input buffer 201 is in chaining (Step S820: Yes), outputs the content type 402 and the frame number 403 to the chaining value recording unit 228, and outputs the chaining continuance signal and the content type 402 to the initialization vector selection unit 225.

Following receipt of the combination of the chaining continuance signal and the content type 402 from the chaining judging unit 213, the initialization vector selection unit 225 reads the chaining value stored in the inter-chunk chaining value holding unit 216 in association with the content type 402 received, and outputs the chaining value to the chaining value selection unit 226.

The chaining value selection unit 226, already having received the initialization vector selection signal from the cryptographic judgment unit 221, selects the chaining value received from the initialization vector selection unit 225 and outputs the chaining value to the cryptographic unit 222 (Step S825).

When the combination of the content type 402 and the frame number 403 received is not stored in the inter-chunk chaining value holding unit 216 in association in Step S820, the chaining judging unit 213 judges that the chunk held by the input buffer 201 is not in chaining (Step S820: No), outputs the content type 402 and the frame number 403 to the chaining value recording unit 228, and outputs the chaining termination signal to the initialization vector selection unit 225.

Following receipt of the chaining termination signal from the chaining judging unit 213, the initialization vector selection unit 225 reads the initialization vector held by the initialization vector holding unit 224, and outputs the initialization vector to the chaining value selection unit 226

Following receipt of the initialization vector from the initialization vector selection unit 225, the chaining value selection unit 226, already having received the initialization vector selection signal from the cryptographic judgment unit 221, outputs the initialization vector to the cryptographic unit 222 as the chaining value to be used (Step S830).

When either the processing in Step S825 or the processing in Step S830 is completed, the cryptographic judgment unit 222 receives the first ciphertext block of the ciphertext block chunk from the cryptographic judgment unit 221.

The cryptographic unit 222 decrypts the received ciphertext block utilizing the key stored in the key holding unit 223 and the chaining value received from the chaining value selection unit 226, and outputs the plaintext block to the output selection unit 229. At the same time, the cryptographic unit 222 outputs, to the chaining value recording unit 228, the chaining value to be applied to the subsequent ciphertext chunk, which is generated during the decryption of the ciphertext block (Step S835).

More specifically, the decryption of the ciphertext block and the calculation of the chaining value to be applied to the subsequent cipher text block performed by the cryptographic unit 222 are realized by the execution of the following 3 procedures: (1) the AES encryption circuit 701 encrypts the chaining value using the key and generates the encrypted chaining value, (2) the exclusive-OR circuit 702 performs bit-by-bit XOR-ing on the generated encrypted chaining value and the ciphertext block, (3) the incrementer 703 increments, by "1", the lower 32 bits of the chaining value so as to calculate the chaining value to be applied to the subsequent ciphertext block.

Following receipt of the plaintext block from the cryptographic unit 222, the output selection unit 229 writes the plaintext block to the output buffer 202.

Following receipt of the chaining value from the cryptographic unit 222, the chaining value recording unit 228 increments the chaining value number counted by the chaining value number counter by "1". Further, the chaining value recording unit 228 compares the incremented chaining value number with the ciphertext block number received from the encryption size calculation unit 211 and judges whether the chaining value received from the cryptographic unit 222 is a chaining value output when the last ciphertext block of the chunk was decrypted by the cryptographic unit 222 (Step S840).

When the incremented chaining value number is less than the ciphertext block number received from the encryption size calculation unit 211 in Step S840, the chaining value recording unit 228 judges that the chaining value is a chaining value output when a ciphertext besides the last ciphertext block of the chunk was decrypted (Step S840: No), and stores, by overwriting, the chaining value input from the cryptographic unit 222 to the in-chunk chaining value holding unit 227 (Step S845). Further, the chaining value recording unit 228 outputs a ciphertext block request signal to the cryptographic judgment unit 221.

Following receipt of the ciphertext block request signal from the chaining value recording unit 228, the cryptographic judgment unit 221 outputs the subsequent ciphertext block to the cryptographic unit 222, and outputs the chaining value selection signal to the chaining value selection unit 226. Following receipt of the chaining value selection signal, the chaining value selection unit 226 reads the chaining value held by the in-chunk chaining value holding unit 227 and outputs the chaining value to the cryptographic unit 222 (Step S850).

When the processing of Step S850 is completed, the processing of Step S835 is launched one again.

When the incremented chaining value number is equivalent to the ciphertext block number received from the encryption size calculation unit 211 in Step S840, the chaining value recording unit 228 judges that the chaining value is a chaining value output when the last ciphertext block of the chunk was decrypted (Step S840: Yes), and stores, by overwriting, the chaining value received from the cryptographic unit 222 to the inter-chunk chaining value holding unit 216 in association with the content type and the frame number received from the chaining judging unit 213 (Step S855).

When the processing of Step S855 is completed, the content decrypting apparatus 2000 enters standby state until the CPUA 111 or the CPUB 112 writes a subsequent chunk to the input buffer 201 (Step S865).

When a subsequent chunk is written to the input buffer 201 by the CPUA 111 or the CPUB 112 during a predetermined time interval, for instance 1ms (Step S870: Yes), the processing of Step S800 is launched once again.

When a subsequent chunk is not written to the input buffer 201 by the CPUA 111 or the CPUB 112 during a predetermined time interval, for instance 1ms (Step S870: No), the content decrypting apparatus 2000 judges that no subsequent chunk exists in the content data 302, and terminates the content decrypting processing.

### <Specific Operations>

Hereinafter, description will be made on a case where a third chunk exists between a first chunk and a second chunk, the first and second chunks belonging to the Video content type and having the same frame number 10, and the third chunk belonging to the Audio1 content type and having a frame number 5. Description is made with the intension of proving that the content decrypting apparatus 2000 is capable of correctly decrypting the first ciphertext block of the second chunk with the use of a correct chaining value even in such a case.

When the cryptographic unit 222 decrypts the last ciphertext block of the first chunk, the chaining value recording unit 228 stores, by overwriting, the chaining value input from the cryptographic unit 222, for instance "Ox00001111", to the inter-chunk chaining value holding unit 216, in association with the content type indicating "Video" and the frame number indicating "10" received from the chaining judging unit 213 (Step S865).

Following this, the content decrypting apparatus 2000 decrypts the third chunk. After having decrypted the third chunk, the content decrypting apparatus 2000 commences decryption of the second chunk.

When the second chunk is written to the input buffer 201, the chunk information obtaining unit 210 obtains the content type indicating "Video" and the frame number indicating "10" (Step S800), and outputs the content type and the frame number to the chaining judging unit 213.

The chaining judging unit 213 checks whether the combination of the content type indicating "Video" and the frame number indicating "10" is stored in the inter-chunk chaining value holding unit 216 in association (Step S820). In this case, since it is confirmed that the combination of the content type indicating "Video" and the frame number indicating "10" are stored in association with the chaining value "0x0000 111", the chaining judging unit 213 judges that the second chunk is in chaining (Step S820: Yes), and outputs the chaining continuance signal and the content type indicating "Video".

Following receipt of the chaining continuance signal and the content type from the chaining judging unit 213, the initialization vector selection unit 225 reads the chaining value "0x00001111" stored in association with the content type indicating "Video" from the inter-chunk chaining value holding unit 216. Further, the initialization vector selection unit 225 outputs the chaining value "0x00001111" to the chaining value selection unit 226. The chaining value selection unit 226 outputs the chaining value "0x00001111" to the cryptographic unit 222.

Hence, it is confirmed that the cryptographic unit 222 decrypts the first ciphertext block of the second chunk utilizing the chaining value "0x00001111", which is the chaining value calculated when the last ciphertext block of the first chunk was decrypted. Therefore, it is proved that the first ciphertext block of the second chunk is correctly decrypted.

### [Embodiment 2]

In the following, description will be made on a content decrypting apparatus for decrypting content encrypted in the ciphertext block chaining mode, as one embodiment of the content decrypting apparatus pertaining to the present invention.

The content decrypting apparatus pertaining to Embodiment 2 of the present invention is a modification of the content decrypting apparatus 2000 of Embodiment 1. In detail, modification has been made so that the content decrypting apparatus is capable of decrypting content in which the data format of part of the chunk header 311 and the data format of the content header 301, both of which are included in the chunk 310 of the content 300, are altered. The content 300 is the content which is to be decrypted by the content decrypting apparatus 2000 of Embodiment 1.

The content decrypting apparatus pertaining to Embodiment 2 of the present invention is a content decrypting apparatus in which modification has been made to the chunk information obtaining unit 210 included in the content decrypting apparatus 2000 of Embodiment 1. More specifically, the chunk information obtaining unit 210 is modified to newly include a content header analysis unit and a field information accumulation unit. Further, the content decrypting apparatus of Embodiment 2 is realized on a playback device 1000 described in Embodiment 1, as is the content decrypting apparatus 2000.

In the following, description on aspects similar to those of Embodiment 1 will be omitted. Therefore, description will be made focusing on aspects which differ from Embodiment 1.

### <Structure>

### <Data Structure of the Content>

Content to be decrypted with use of a content decrypting apparatus 3000 of Embodiment 2 is content in which modification has been made such that information corresponding to the content type 402 and the frame number 403, both of which existing in the chunk header 311 in Embodiment 1, exist in the content header of the content to be decrypted.

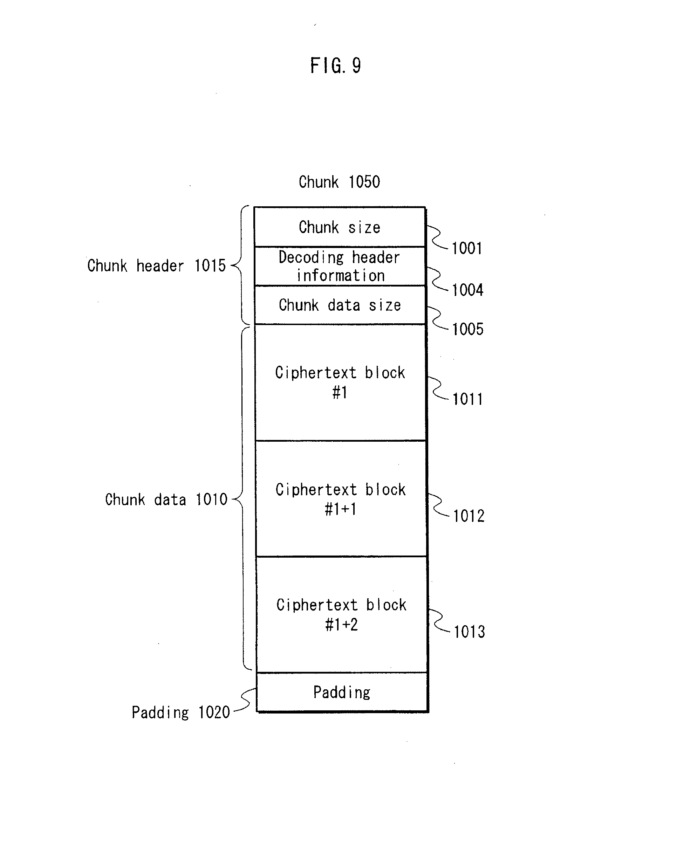

Fig. 9 is a structural diagram showing the data structure of a chunk 1050 composing the content to be decrypted by the content decrypting apparatus 3000 of Embodiment 2.

The chunk 1050 includes a chunk header 1015, a chunk data 1010, and a padding 1020.

The chunk header 1015 is unencrypted data which includes a chunk size 1001 indicating the size of the chunk, a decoding header information 1004 including information for decoding ESs, and a chunk data size 1005 indicating the size of the chunk data 1010. Further, the components of the chunk header 1015: the chunk size 1001, the decoding header information 1004, and the chunk data size 1005 have fixed bit lengths and are arranged in a fixed order. In addition, the chunk data 1010 is similar to the chunk data 312 of Embodiment 1, while the padding 1020 is similar to the padding 313 of Embodiment 1.

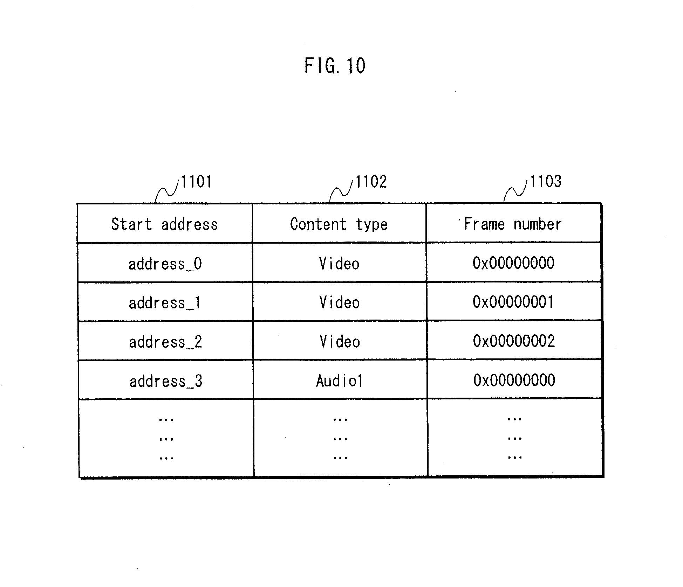

Fig. 10 is a structural diagram of information included in a content header constituting the content of Embodiment 2.

The content header stores a combination of a chunk start address 1101, a content type 1102, and a frame number 1103 for each of the chunks 1050 constituting the content. The chunk start address 1101, the content type 1102, and the frame number 1103 are stored in association with each other and in the order in which the chunks 1050 are arranged in the content.

The content type 1102 is similar to the content type 402 of Embodiment 1, while the frame number 1103 is similar to the frame number 602 of Embodiment 1.

### <Content Decoding Apparatus 3000>

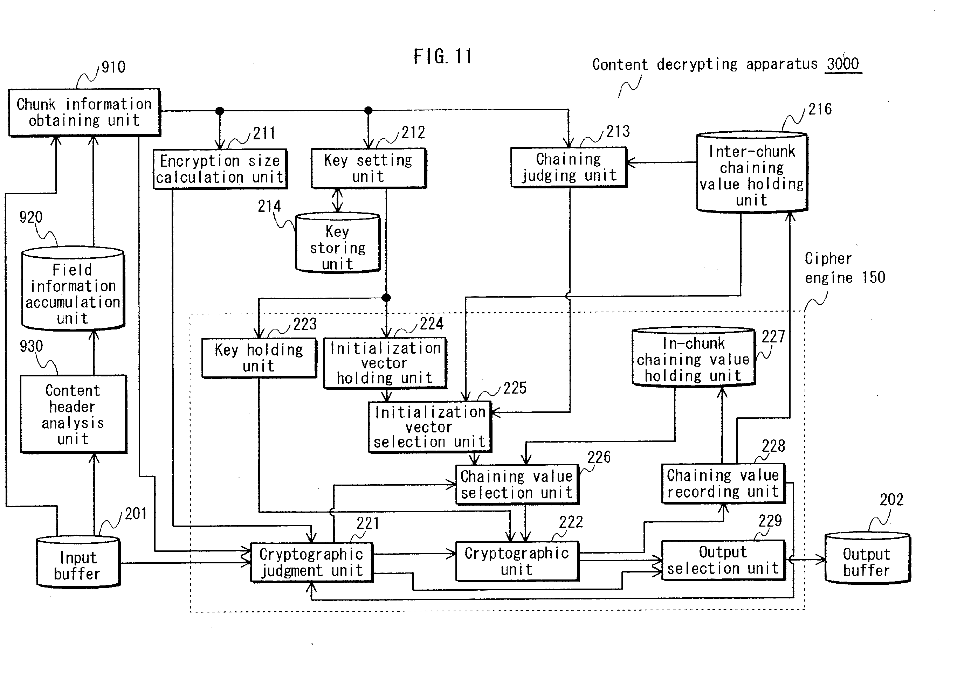

Fig. 11 is a block diagram showing the functional structure of the content decrypting apparatus 3000.

The content decrypting apparatus 3000 differs from the content decrypting apparatus 2000 of Embodiment 1 in that the chunk information obtaining unit 210 is modified into a chunk information obtaining unit 910, and a field information accumulation unit 920 and a content header analysis unit 930 have been newly added thereto.

The field information accumulation unit 920 is a storage area for storing the chunk start address 1101, the content type 1102, and the frame number 1103 of each of the chunks 1050, and is mounted as a part of the memory block 120. As is mentioned above, the chunk start address 1101, the content type 1102, and the frame number 1103 are stored in the content header in association with each other.

The content header analysis unit 930 reads, from the content header held by the input buffer 201, all combinations of the chunk start address 1101, the content type 1102, and the frame number 1103 which are stored in association according to the chunks 1050 they correspond to, and stores the combinations to the field information accumulation unit 920.

The chunk information obtaining unit 910 obtains the chunk start address 1101 held by the input buffer 201, obtains the chunk size 1001, and the chunk data size 1005 from the chunk header 1015, and further obtains, from the field information accumulation unit 920, the content type 1102 and the frame number 1103 which are associated with the chunk held by the input buffer 201. After having obtained all such information, the chunk information obtaining unit 910 outputs the chunk start address 1101, the chunk size 1001, and the chunk data size 1005 to the encryption size calculation unit 211, outputs the content type 1102 to the key setting unit 212, and outputs the content type 1102 and the frame number 1103 to the chaining judging unit 213.

When the CPUA 111 or the CPUB 112 writes a content header to the input buffer 201, the chunk information obtaining unit 910 outputs, to a cipher engine 150, a content header signal indicating that the data held by the input buffer 201 is the content header.

In the following, description will be made on the details of the operations of the content decrypting apparatus 3000 having the above structure, with reference to the accompanying drawings.

### <Operations>

When playback processing of content is launched by the playback device 1000, first the CPUA 111 or the CPUB 112 writes a content header of the content to be decrypted to the input buffer 201. The content to be decrypted is recorded onto the external recording medium 137, the internal hard disk of the hard disk device 131, or the RAM 122.

From this point and on, the CPUA 111 or the CPUB 112 writes chunks constituting the content data to the input buffer 201, starting from the first chunk and ending at the final chunk.

When the content header has been written to the input buffer 201, the content decrypting apparatus 3000 launches content decrypting processing.

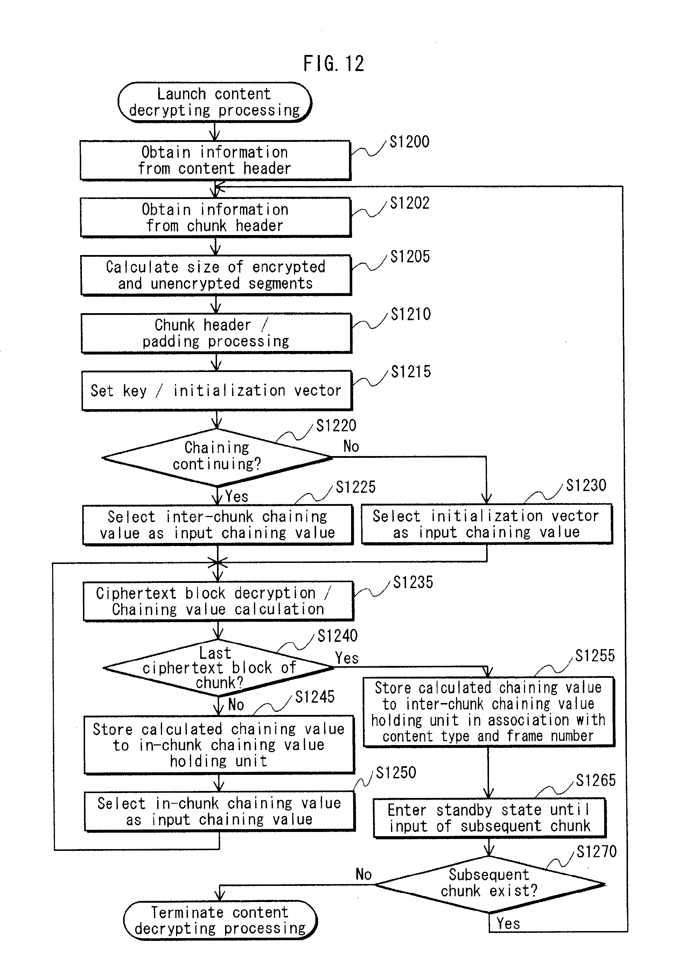

Fig. 12 is a flowchart showing the content decrypting processing performed by the content decrypting apparatus 3000.

When the content decrypting apparatus 3000 launches the content decrypting processing, the chunk information obtaining unit 910 outputs a content header signal to the cryptographic judgment unit 221. The cryptographic judgment unit 221 receives the content header signal.

Following this, the content header analysis unit 930 reads, from the content header held by the input buffer 201, all combinations of the chunk start address 1101, the content type 1102, and the frame number 1103 which are stored in association with respect to the chunks they correspond to. The content header analysis unit 930 further stores all the combinations of the chunk start address 1101, the content type 1102, and the frame number 1103 to the field information accumulation unit 920 (Step S1200).

Following receipt of the content header signal from the chunk information obtaining unit 910, the cryptographic judgment unit 221 reads the content header from the input buffer 201, and outputs the content header to the output selection unit 229. The output selection unit 229 writes the content header 301 to the output buffer 202.

When a chunk has been written to the input buffer 201 by the CPUA 111 or the CPUB 112, the chunk information obtaining unit 910 obtains the chunk start address of the chunk held by the input buffer 201, and further obtains the chunk size 1001 and the chunk data size 1005 from the chunk header 1015 (Step S1202). Additionally, the chunk information obtaining unit 910 obtains the content type 1102 and the frame number 1103 associated with the chunk held by the input buffer 201 from the field information accumulation unit 920. Following receipt of such information, the chunk information obtaining unit 910 outputs the chunk start address, the chunk size 1001, and the chunk data size 1005 to the encryption size calculation unit 211, outputs the content type 1102 to the key setting unit 212, and outputs the content type 1102 and the frame number 1103 to the chaining judging unit 213.

The procedures of steps S1205-S1265 following this point are similar to the procedures of steps S805 through S865 of the operations of the content decrypting apparatus 2000 of Embodiment 1, and therefore description thereof will be omitted.

Note that individually, Step S1205 corresponds to Step S805, Step S1210 corresponds to Step S810, Step S1215 corresponds to Step S815, Step S1220 corresponds to Step S820, Step S1225 corresponds to Step S825, Step S1230 corresponds to Step S830, Step S1235 corresponds to Step S835, Step S1240 corresponds to Step S840, Step S1245 corresponds to Step S845, Step S1250 corresponds to Step S850, Step S1255 corresponds to Step S855, and Step S1265 corresponds to Step S865.

In Step S1265, when a subsequent chunk is written to the input buffer 201 by the CPUA 111 or the CPUB 112 during a predetermined time interval, for instance 1ms, after the content decrypting apparatus 3000 has entered standby state (Step S1270: Yes), the processing of Step S1202 is launched once again.

When a subsequent chunk is not written to the input buffer 201 by the CPUA 111 or the CPUB 112 during a predetermined time interval, for instance 1ms (Step S1270: No), the content decrypting apparatus 3000 judges that no subsequent chunk exists in the content data 302, and terminates the content decrypting processing.

### [Embodiment 3]

In the following, description will be made on a content decrypting apparatus for decrypting content encrypted in the ciphertext block chaining mode, as one embodiment of the content decrypting apparatus pertaining to the present invention.

The content decrypting apparatus pertaining to Embodiment 3 is a modification of the content decrypting apparatus 2000 of Embodiment 1. In detail, modification has been made so that the content decrypting apparatus is capable of decrypting content with a data format in which a ciphertext block constituting the content to be decrypted can be divided between two consecutive ciphertext block chunks.

The content decrypting apparatus pertaining to Embodiment 3 is a content decrypting apparatus in which modification has been made to the chunk information obtaining unit 210, the inter-chunk chaining value holding unit 216, and the chaining value recording unit 228 included in the content decrypting apparatus 2000 of Embodiment 1, and further modification has been made to newly include a fragment processing control unit 1300, a pre-processing unit 1301, and a post-processing unit 1302. Further, the content decrypting apparatus of Embodiment 3 is realized on a playback device which is obtained by modifying the playback device 1000 of Embodiment 1 such that the cipher engine 150 is replaced by a cipher engine 1350 obtained by partial modification thereof.

In the following, description on aspects similar to those of Embodiment 1 will be omitted. Therefore, description will be made focusing on aspects which differ from Embodiment 1.

### <Structure>

### <Data Structure of the Content>

The content to be decrypted by a content decrypting apparatus 4000 of Embodiment 3 has a data format in which the ciphertext blocks of Embodiment 1 are modified to be capable of being divided into two portions, each of the portions existing in a different one of two consecutive ciphertext block chunks.

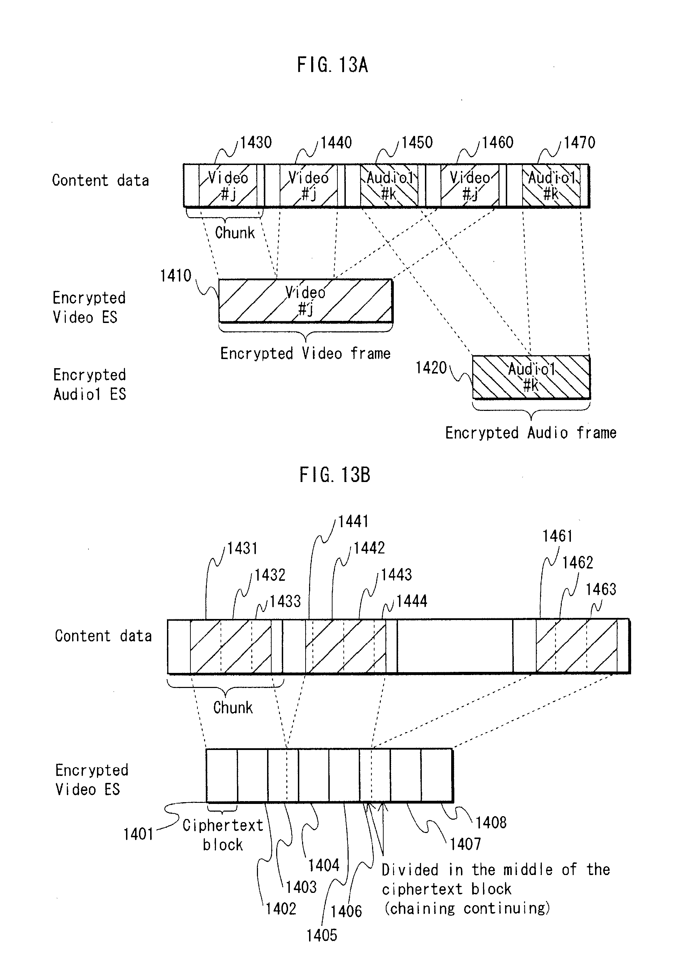

Fig. 13A is a diagram showing the data structure of one portion of the content data constituting the content to be decrypted by the content decrypting apparatus 4000. Fig. 13B is an enlarged view of a section of Fig. 13A.

An encrypted frame 1410 has a content type indicating "Video" and a frame number indicating "j", and is divided into 3 ciphertext block chunks, a chunk 1430, a chunk 1440, and a chunk 1460.

An encrypted frame 1420 has a content type indicating "Audio1" and a frame number indicating "k", and is divided into 2 ciphertext block chunks, a chunk 1450 and a chunk 1470.

More specifically, the encrypted Video frame 1410 is consisted of 8 ciphertext blocks, ciphertext blocks 1401 through 1408. Among the 8 ciphertext blocks, ciphertext blocks 1401 and 1402 are included in the chunk 1430, ciphertext blocks 1404 and 1405 are included in the chunk 1440, and the ciphertext blocks 1407 and 1408 are included in the chunk 1460.

The ciphertext block 1403 is divided into a former portion and a latter portion, and the former portion is included in the chunk 1430, whereas the latter portion is included in the chunk 1440.

Similarly, the ciphertext block 1404 is divided into a former portion and a latter portion, and the former portion is included in the chunk 1440, whereas the latter portion is included in the chunk 1460.

As is mentioned above, the content data of the content to be decrypted with use of the content decrypting apparatus 4000 has a data format in which a ciphertext block is capable of being divided into two portions, each of the portions existing in a different one of two consecutive ciphertext block chunks.

### <Content Decoding Apparatus 4000>

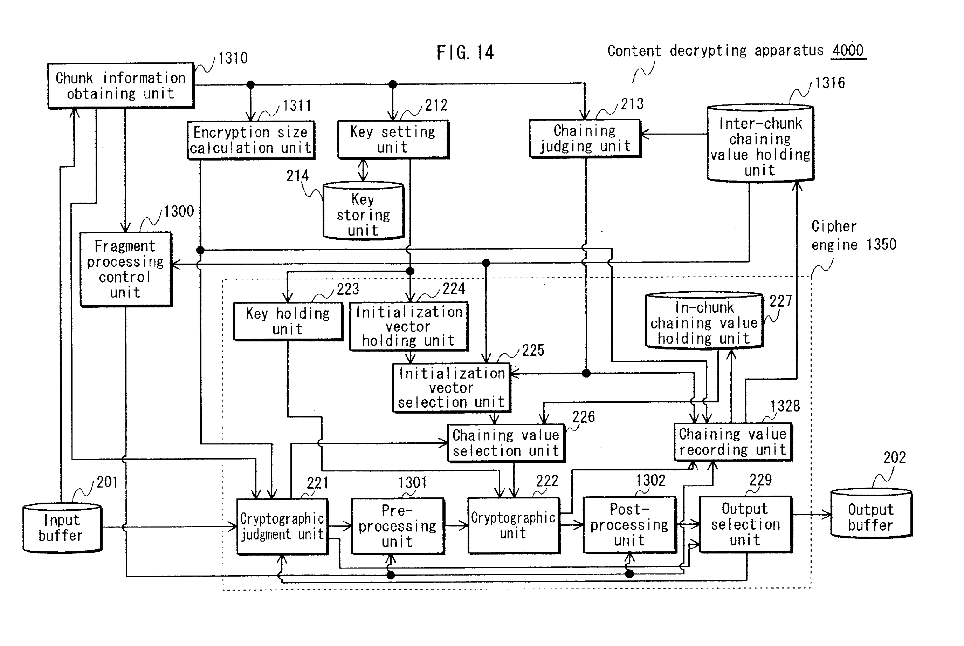

Fig. 14 is a block diagram showing the functional structure of the content decrypting apparatus 4000.

The content decrypting apparatus 4000 differs from the content decrypting apparatus 2000 of Embodiment 1 in that the chunk information obtaining unit 210 is modified into a chunk information obtaining unit 1310, the inter-chunk chaining value holding unit 216 is modified into an inter-chunk chaining value holding unit 1316, and the chaining value recording unit 228 is modified into a chaining value recording unit 1328. In addition, further modification has been made so that the content decrypting apparatus 4000 newly includes a fragment processing control unit 1300, a pre-processing unit 1301, and a post-processing unit 1302.

The chunk information obtaining unit 1310 obtains the chunk start address of the chunk held by the input buffer 201, obtains the chunk size 401, the chunk data size 405, the content type 402, and the frame number 403 from the chunk header 311. After having obtained all such information, the chunk information obtaining unit 1310 outputs, the chunk start address, the chunk size 401, and the chunk data size 405 to the encryption size calculation unit 211, outputs the content type 402 to the key setting unit 212, and outputs the content type 402 and the frame number 403 to the chaining judging unit 213 and the fragment processing control unit 1300.

When the CPUA 111 or the CPUB 112 writes a content header 301 to the input buffer 201, the chunk information obtaining unit 1310 outputs, to the cipher engine 1350, a content header signal indicating that the data held by the input buffer 201 is the content header 301.

The inter-chunk chaining value holding unit 1316 is a storage area for storing combinations of a content type, a frame number, a chaining value, and a fragment data size which indicates the bit count of the last ciphertext block of the chunk in association. In addition, the inter-chunk chaining value holding unit 1316 is mounted as a part of the memory block 120.

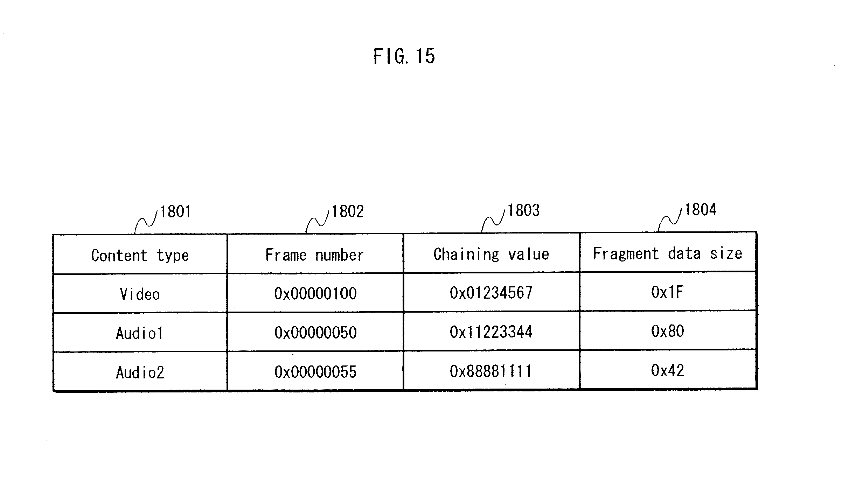

Fig. 15 is a diagram showing the information stored onto the inter-chunk chaining value holding unit 1316.

As is shown in Fig. 15, the inter-chunk chaining value holding unit 1316 stores combinations of a frame number, a chaining value, and a fragment data size in association for each of the content types. The frame numbers, the chaining values, the fragment data sizes, and the content types are respectively listed in rows 1801, 1802, 1803, and 1804.

More specifically, the frame number stored in row 1802 indicates the frame number of the most recently decrypted frame of the associated content type listed in row 1801. The chaining value listed in row 1803 indicates a chaining value calculated when the last ciphertext block of the chunk belonging to the frame number listed in row 1802 was decrypted. The fragment data size listed in row 1804 indicates a bit count of the last ciphertext block of the chunk belonging to the frame number listed in row 1802.

Note that the combination of the frame number listed in row 1802, the chaining value listed in row 1803, and the fragment data size listed in row 1804 is overwritten by the cipher engine 150 with respect to the associated content type listed in 1801.

Following receipt of the content type 402 and the frame number 403 from the chunk information obtaining unit 1310, the fragment processing control unit 1300 reads, from the inter-chunk chaining value holding unit 1316, the fragment data size listed in row 1804 corresponding to the combination of the content type 402 and the frame number 403. Then the fragment processing control unit 1300 calculates the sizes of the first and last ciphertext blocks of the chunk stored in the input buffer 210, causes the pre-processing unit 1301, the cryptographic unit 222, and the post-processing unit 1302 to execute fragment processing, and outputs the bit count of the last ciphertext block to the chaining value recording unit 1328.

Details of the fragment processing will be described later, with reference to the accompanying drawings.

The size of the first ciphertext block of the chunk (hereinafter referred to as "the first ciphertext block size") is calculated by subtracting the fragment data size held by the inter-chunk chaining value holding unit 1316 listed in row 1804, from "128" which is the unit bit count of a ciphertext block. The size of the last ciphertext block of the chunk (hereinafter referred to as "the last ciphertext block size") is defined as a remainder obtained by dividing a sum of the chunk data size 405 output from the encryption size calculation unit 1311 and the fragment data size read from the inter-chunk chaining value holding unit 1316 listed in row 1804, by "128" which is the unit bit count of a ciphertext block.

When the first ciphertext block size received from the fragment processing control unit 1300 is less than 128 bits, and when receiving the first ciphertext block of the chunk held by the input buffer 201 from the cryptographic judgment unit 221, the pre-processing unit 1301 appends, to the head portion of the received ciphertext block, a number of "O"s equivalent to the difference between 128 bits and the first ciphertext block size. Hence, the pre-processing unit 1301 generates a 128-bit synthesized ciphertext block. The pre-processing unit 1301 outputs the synthesized ciphertext block to the cryptographic unit 222 instead of the ciphertext block received from the cryptographic judgment unit 221.

Additionally, when the last ciphertext block size received from the fragment processing control unit 1300 is less than 128 bits, and when receiving the last ciphertext block of the chunk held by the input buffer 201 from the cryptographic judgment unit 221, the pre-processing unit 1301 appends, to the foot portion of the recived ciphertext block, a number of "0"s equivalent to the numbers of bits falling short of 128 bits. Hence, the pre-processing unit 1301 generates a 128-bit synthesized ciphertext block. The pre-processing unit 1301 outputs the synthesized ciphertext block to the cryptographic unit 222 instead of the ciphertext block received from the cryptographic judgment unit 221.

When the first ciphertext block size received from the fragment processing control unit 1300 is less than 128 bits, and when receiving a plaintext block obtained by decrypting the first ciphertext block of the chunk held by the input buffer 201 from the cryptographic unit 222, the post-processing unit 1302 deletes, from the head portion of the plaintext block, a number of "0"s equivalent to the difference between 128 bits and the first ciphertext block size. Hence, the post-processing unit 1302 generates a synthesized plaintext block. The post-processing unit 1302 outputs the synthesized plaintext block to the output selection unit 229 instead of the plaintext block received from the cryptographic judgment unit 221.

Additionally, when the last ciphertext block size received from the fragment processing control unit 1300 is less than 128 bits, and when receiving a plaintext block obtained by decrypting the last ciphertext block of the chunk held by the input buffer 201 from the cryptographic unit 222, the post-processing unit 1302 deletes, from the foot portion of the plaintext block, a number of "0"s equivalent to the number of bits falling short of 128 bits. Hence, the post-processing unit 1302 generates a synthesized plaintext block. The post-processing unit 1302 outputs the synthesized plaintext block to the output selection unit 229 instead of the plaintext block received from the cryptographic judgment unit 221.

The chaining value recording unit 1328 receives the ciphertext block number from the encryption size calculation unit 1311, the content type and frame number from the chaining judging unit 213, the chaining value from the cryptographic unit 222, and the last ciphertext block size from the fragment processing control unit 1300. Following receipt of the chaining value from the cryptographic unit 222, the chaining value recording unit 1328 stores the chaining value to either the inter-chunk chaining value holding unit 1316 or the in-chunk chaining value holding unit 227.

When the chaining value received from the cryptographic unit 222 is a chaining value output when the cryptographic unit 222 decrypted the last ciphertext block of the chunk, the chaining value recording unit 1328 stores, by overwriting, the chaining value to the inter-chunk chaining value holding unit 1316 while establishing association between the chaining value and the content type, frame number, and the fragment data size received from the chaining judging unit 213. When the chaining value received from the cryptographic unit 222 is a chaining value output when the cryptographic unit 222 decrypted a ciphertext block besides the last ciphertext block of the chunk, the chaining value recording unit 1328 stores, by overwriting, the chaining value to the in-chunk chaining value holding unit 227 and further outputs a ciphertext block request signal to the cryptographic judgment unit 221.

Note that when the chaining value received from the cryptographic unit 222 is a chaining value output when the cryptographic unit decrypted the last ciphertext block of the chunk and further the fragment data size is less than 128 bits, the chaining value to be stored, by overwriting, to the inter-chunk chaining value holding unit 1316 is the chaining value previously received from the cryptographic unit 222.

Here, the fragment data size to be written to the inter-chunk chaining value holding unit 1316 is the last ciphertext block size received from the fragment processing control unit 1300.

The chaining value recording unit 1328 is provided with a chaining value number counter for counting the number of chaining values received. This allows the chaining value recording unit 1328 to judge whether the chaining value received from the cryptographic unit 222 is a chaining value output when the cryptographic unit 222 decrypted the last ciphertext block of the chunk.

The chaining value number counter is reset every time a ciphertext block number is input from the encryption size calculation unit 1311.

When receiving a chaining value from the cryptographic unit 222, the chaining value recording unit 1328 increments the chaining value number counted by the chaining value number counter by "1". Further, when the incremented chaining value number is smaller than the ciphertext block number input from the encryption size calculation unit 211, the chaining value recording unit 1328 judges that the chaining value was output when a ciphertext block besides the last ciphertext block of the chunk was decrypted. When the incremented chaining number is equivalent to the ciphertext block number input from the encryption size calculation unit 211, the chaining value recording unit 1328 judges that the chaining value was output when the last ciphertext block of the chunk was decrypted.

The cipher engine 1350 differs from the cipher engine 150 of Embodiment 1 in that the inter-chunk chaining value holding unit 216 is modified into the inter-chunk chaining value holding unit 1316, and the chaining value recording unit 228 is modified into the chaining value recording unit 1328. In addition, further modification has been made so that the cipher engine 1350 newly includes the fragment processing control unit 1300, the pre-processing unit 1301, and the post-processing unit 1302.

### <Fraction Processing>

In the following, detailed description will be made on the fragment processing in which the fragment processing control unit 1300 utilizes the pre-processing unit 1301, the cryptographic unit 222, and the post-processing unit 1302, with reference to the accompanying drawings.

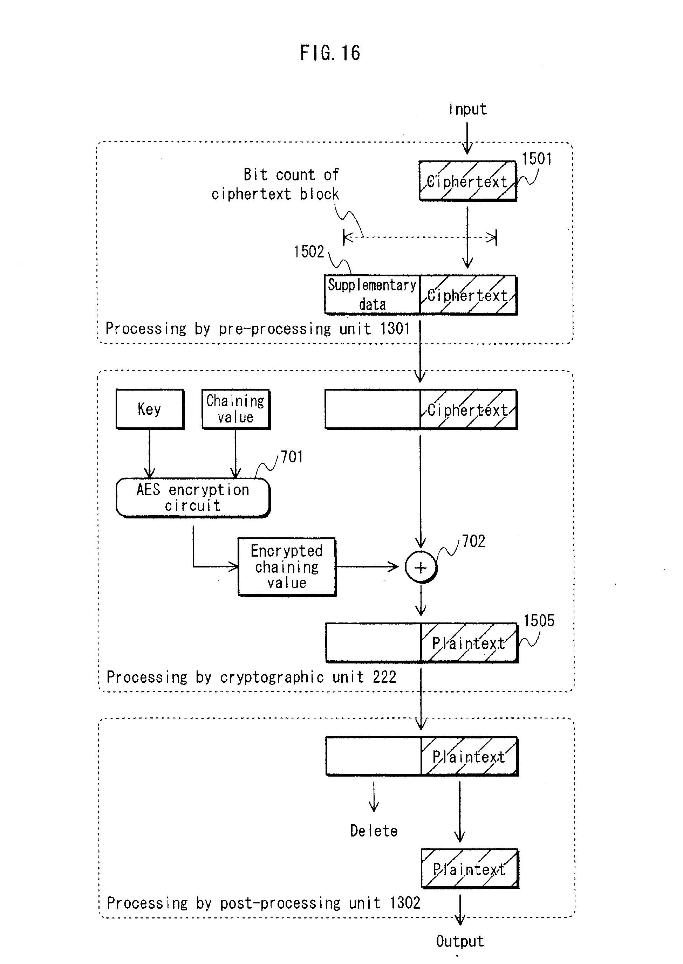

Fig. 16 is a diagram showing the operations involved in the processing performed by the pre-processing unit 1301, the cryptographic unit 222, and the post-processing unit 1302, in a case where a former portion of a ciphertext block is missing.

In a case where the first ciphertext block size received from the fragment processing control unit 1300 is less than 128 bits, and when receiving the first ciphertext block of the chunk held by the input buffer 201 from the cryptographic judgment unit 221, the pre-processing unit 1301 judges that a number of bits equivalent to the difference between 128 bits and the first ciphertext block size is missing from the head portion of the ciphertext block 1501 received. Accordingly, the pre-processing unit 1301 appends supplementary data 1502 consisting of a number of "0"s equivalent to the number of bits missing to the ciphertext block 1501 to generate a 128-bit synthesized ciphertext block.

The pre-processing unit 1301 outputs the synthesized ciphertext block to the cryptographic unit 222 instead of the ciphertext block 1501 received from the cryptographic judgment unit 221.

The cryptographic unit 222 performs bit-by-bit XOR-ing on the 128-bit ciphertext block and the 128-bit chaining value. Hence, the cryptographic unit 222 generates a plaintext block, and outputs the plaintext block to the post-processing unit 1302.

In a case where the first ciphertext block size received from the fragment processing control unit 1300 is less than 128 bits, and when receiving a plaintext block obtained by decrypting the first ciphertext block held by the input buffer 201 from the cryptographic unit 222, the post-processing unit 1302 judges that a number of bits equivalent to the difference between 128 bits and the first ciphertext block size is appended to the head portion of the plaintext block. Accordingly the post-processing unit 1302 removes the appended number of bits from the head portion of the plaintext block to generate a synthesized plaintext block. The post-processing unit 1302 outputs the generated synthesized plaintext block to the output selection unit 229 instead of the plaintext block received from the cryptographic judgment unit 221.

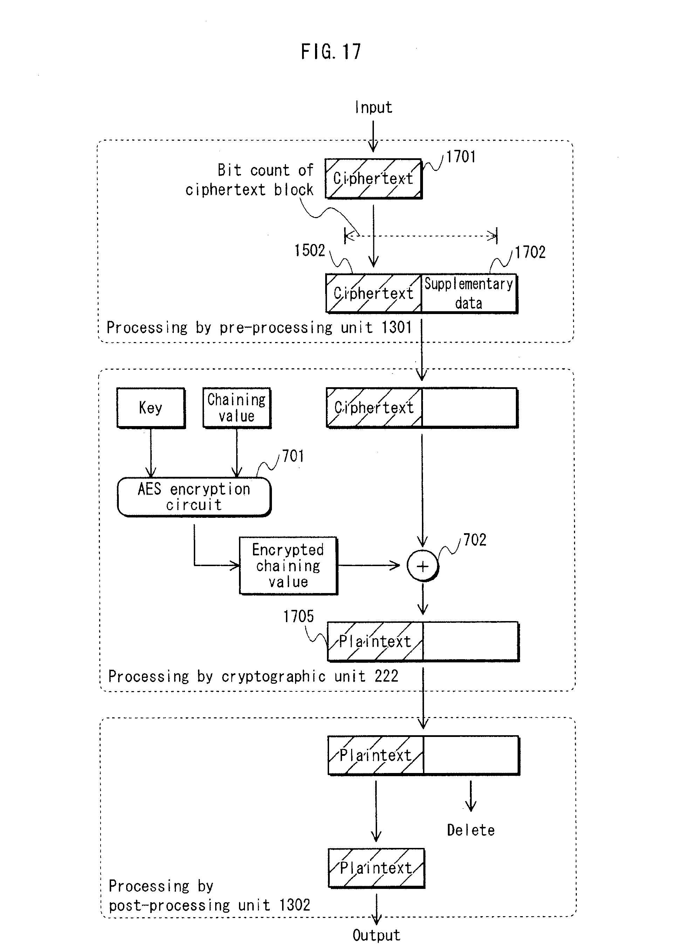

Fig. 17 is a diagram, showing the operations involved in the processing performed by the pre-processing unit 1301, the cryptographic unit 222, and the post-processing unit 1302, in a case where a latter portion of a ciphertext block is missing.

In a case where the last ciphertext block size received from the fragment processing control unit 1300 is less than 128 bits, and when receiving the last ciphertext block of the chunk held by the input buffer 201 from the cryptographic judgment unit 221, the pre-processing unit 1301 judges that that a number of bits equivalent to the difference between 128 bits and the last ciphertext block size is missing from the foot portion of the ciphertext block 1701 received. Accordingly, the pre-processing unit 1301 adds supplementary data 1702 consisting of a number of "0"s equivalent to the number of bits missing to generate a 128-bit synthesized ciphertext block.

The pre-processing unit 1301 outputs the synthesized ciphertext block to the cryptographic unit 222 instead of the ciphertext block 1701 received from the cryptographic judgment unit 221.

The cryptographic unit 222 performs bit-by-bit XOR-ing on the 128-bit ciphertext block and the 128-bit chaining value. Hence, the cryptographic unit 222 generates a plaintext block, and outputs the plaintext block to the post-processing unit 1302.

In a case where the last ciphertext block size received from the fragment processing control unit 1300 is less than 128 bits, and when receiving the plaintext block obtained by decrypting the last ciphertext block of the chunk held by the input buffer 201 from the cryptographic unit 222, the post-processing unit 1302 judges that a number of bits equivalent to the difference between 128 bits and the last ciphertext block size is appended to the foot portion of the received plaintext block. The post-processing unit 1302 accordingly removes the appended number of bits from the foot portion of the plaintext block to generate a synthesized plaintext. The post-processing unit 1302 outputs the generated synthesized plaintext block to the output selection unit 229 instead of the plaintext block received from the cryptographic judgment unit 221.

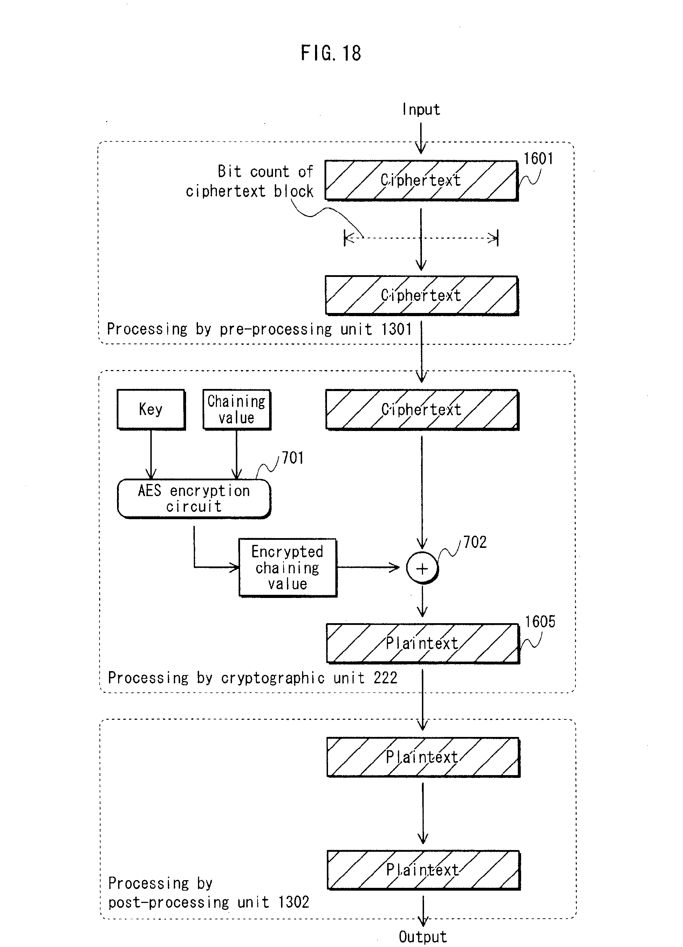

Fig. 18 is a diagram showing the operations involved in the processing performed by the pre-processing unit 1301, the cryptographic unit 222, and the post-processing unit 1302, in a case where a ciphertext block is complete, or does not lack any data.

The pre-processing unit 1031 judges that a received ciphertext block is complete and outputs the received ciphertext block at its original state to the cryptographic unit 222 when;
(1) the first ciphertext block size received from the fragment processing control unit 1300 is 128 bits and when further receiving a first ciphertext block of the chunk held by the input buffer 201 from the cryptographic judgment unit 221,
(2) the last ciphertext block size received from the fragment processing control unit 1300 is 128 bits and when further receiving a last ciphertext block of the chunk held by the input buffer 210 from the cryptographic judgment unit 221, and
(3) receiving, from the cryptographic judgment unit 221, a ciphertext block which is a ciphertext block besides the first and last ciphertext blocks of the chunk held by the input buffer 201.

The cryptographic unit 222 performs bit-by-bit XOR-ing on the 128-bit ciphertext block and the 128-bit chaining value. Hence the cryptographic unit 222 generates a plaintext block, and outputs the plaintext block to the post-processing unit 1302.

The post-processing unit 1302 judges that the received plaintext block is complete, and outputs the received plaintext block at its original state to the output selection unit 229 when;
(1) the first ciphertext block size received from the fragment processing control unit 1300 is 128 bits and when further receiving a plaintext block obtained by decrypting the first ciphertext block of the chunk held by the input buffer 201 from the cryptographic unit 222,
(2) the last ciphertext block size received from the fragment processing control unit 1300 is 128 bits and when further receiving a plaintext block obtained by decrypting the last ciphertext block by the input buffer 210 from the cryptographic unit 222, and
(3) receiving, from the cryptographic unit 222, a plaintext block which is obtained by decrypting a ciphertext block besides the first and last ciphertext blocks of the chunk held by the input buffer 201.

In the following, description will be made on the details of the operations of the content decrypting apparatus 4000 having the above structure, with reference to the accompanying drawings.

### <Operations>

When playback processing of content is launched by the playback device, first the CPUA 111 or the CPUB 112 writes a content header 301 of the content to be decrypted to the input buffer 201. The content to be decrypted is recorded onto the external recording medium 137, the internal hard disk of the hard disk device 131, or the RAM 122.

From this point and on, the CPUA 111 or the CPUB 112 writes chunks constituting the content data to the input buffer 201, starting from the first chunk and ending at the final chunk.

When the content header 301 has been written to the input buffer 201, the content decrypting apparatus 4000 launches content decrypting processing

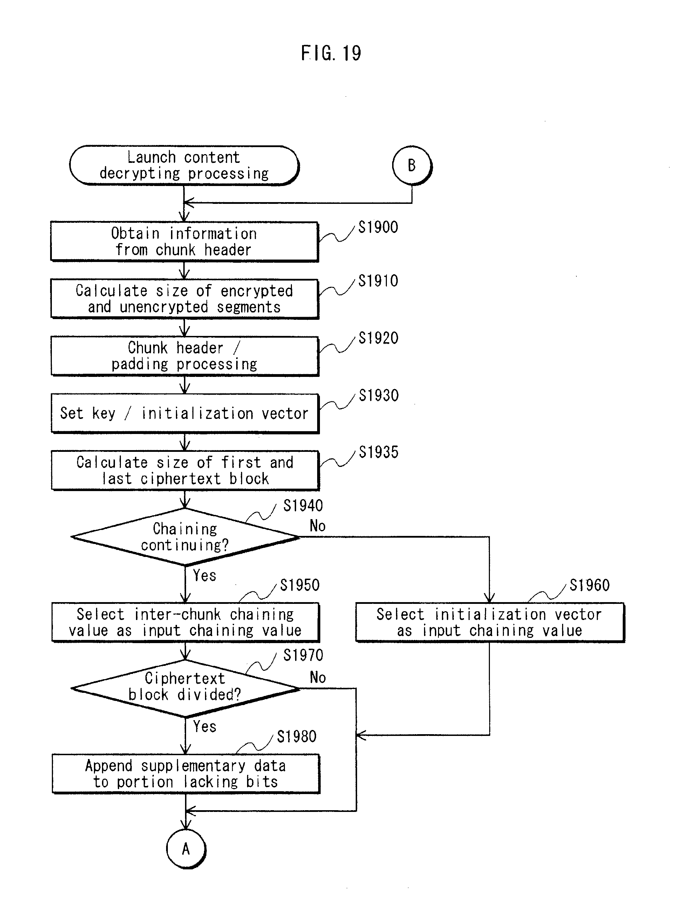

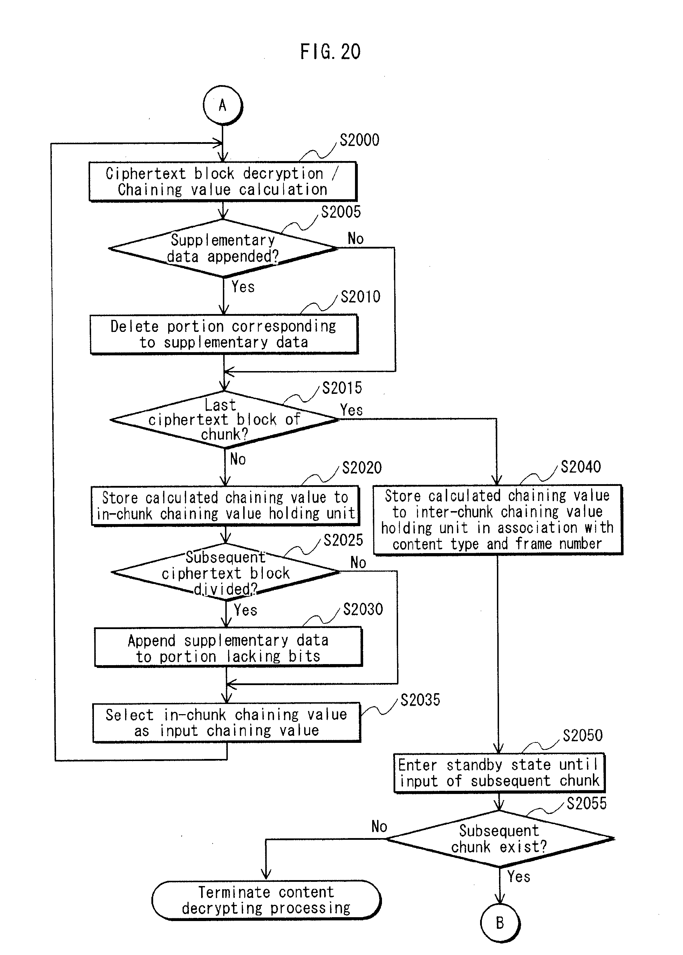

Figs. 19 and 20 are flowcharts showing the content decrypting processing performed by the content decrypting apparatus 4000.

When the content decrypting apparatus 4000 launches the content decrypting processing, the chunk information obtaining unit 1310 outputs a content header signal to the cryptographic judgment unit 221. The cryptographic judgment unit 221 receives the content header signal

Following receipt of the content header signal from the chunk information obtaining unit 1310, the cryptographic judgment unit 221 reads the content header 301 from the input buffer 201, and outputs the content header 301 to the output selection unit 229. The output selection unit writes the content header 301 to the output buffer 202.

When a chunk has been written to the input buffer 201 by the CPUA 111 or the CPUB 112, the chunk information obtaining unit 1310 obtains the chunk start address of the chunk held by the input buffer 201, and further obtains the chunk size 401, the chunk data size 405, the content type 402, and the frame number 403 from the chunk header 311 (Step S1900). Additionally, the chunk information obtaining unit 1310 outputs the chunk start address, the chunk size 401, and the chunk data size 405 to the encryption size calculation unit 1311, outputs the content type 402 to the key setting unit 212, and outputs the frame number 403 to the chaining judging unit 213 and the fragment processing control unit 1300.

Following receipt of the chunk start address, the chunk size 401, and the chunk data size 405 from the chunk information obtaining unit 1310, the encryption size calculation unit 1311 calculates the start address of the padding 313, the end address of the chunk, and the ciphertext block number indicating the number of ciphertext blocks included in the chunk data 312 (Step S1910). The encryption size calculation unit 1311 outputs the chunk start address, the start address of the padding 313, and the chunk end address to the cryptographic judgment unit 221 and outputs the ciphertext block number to the chaining value recording unit 1328.

Following receipt of the ciphertext block number from the encryption size calculation unit 1311, the chaining value recording unit 1328 resets the number of chaining values counted by the chaining value number counter.

Following receipt of the chunk start address, the start address of the padding 313, and the chunk end address from the encryption size calculation unit 1311, the cryptographic judgment unit 221 reads the chunk header 311 and the padding 313 from the input buffer 201 and outputs the chunk header 311 and the padding 313 to the output selection unit 229. Following receipt of the chunk header 311 and the padding 313, the output selection unit 229 writes the chunk header 311 and the padding 313 to the output buffer 202 (Step S1920), and outputs the initialization vector selection signal to the chaining value selection unit 226.

Following receipt of the content type 402 from the chunk information obtaining unit 1310, the key setting unit 212 reads the key listed in row 502 and the initialization vector listed in row 503 which are stored in association with the content type 402 from the key storing unit 214. Further, the key setting unit 212 outputs the key to the key holding unit 223, and outputs the initialization vector to the initialization vector holding unit 224. Following receipt of such information, the key holding unit 223 stores, by overwriting, the key, and the initialization vector holding unit 224 stores, by overwriting, the initialization vector (Step S1930).

Following receipt of the content type 402 and the frame number 403 from the chunk information obtaining unit 1310, the fragment processing control unit 1300 reads the fragment data size listed in row 1804 in association with the combination of the content type 402 and the frame number 403 from the inter-chunk chaining value holding unit 1316. In addition, the fragment processing control unit 1300 calculates the sizes of the first and last ciphertext blocks of the chunk held by the input buffer 201 (Step S1935), and outputs the first ciphertext block size to the pre-processing unit 1301 and the post-processing unit 1302, and outputs the last ciphertext block size to the chaining value recording unit 1328.

Following receipt of the content type 402 and the frame number 403 from the chunk information obtaining unit 1310, the chaining judging unit 213 checks whether the combination of the content type 402 and the frame number 403 is stored in the inter-chunk chaining value holding unit 1316 in association, so as to judge whether the chunk held by the input buffer 201 is in chaining (Step S1940). When the content type 402 and the frame number 403 are stored in association, the chaining judging unit judges that the chunk held by the input buffer 201 is in chaining (Step S1940: Yes), and outputs the content type 402 and the frame number 403 to the chaining value recording unit 1328, and further outputs the chaining continuance signal and the content type 402 to the initialization vector selection unit 225.

Following receipt of the combination of the chaining continuance signal and the content type 402 from the chaining judging unit 213, the initialization vector selection unit 225 reads the chaining value stored in association with the content type 402 from the inter-chunk chaining value holding unit 1316, and outputs the chaining value to the chaining value selection unit 226.

The chaining value selection unit 226, already having received the initialization vector selection signal from the cryptographic judgment unit 221, selects the chaining value received from the initialization vector selection unit 225 and outputs the selected chaining value to the cryptographic unit 222 (Step S1950).

Following this, the cryptographic judgment unit 221 reads the first ciphertext block of the chunk stored in the input buffer 201, and outputs the first ciphertext block to the pre-processing unit 1301.

The pre-processing unit 1301 judges whether the first ciphertext block size received from the fragment processing control unit 1300 is less than 128-bits so as to further judge whether the ciphertext block is divided or not (Step S1970). When the first ciphertext block size is less than 128-bits, the pre-processing unit 1301 judges that the ciphertext block is divided (Step S1970: Yes), and adds a number of "0" s equivalent to the number of bits short of 128-bits to the head portion of the received ciphertext block to generate a 128-bit synthesized ciphertext block. Further, the pre-processing unit 1301 outputs the generated synthesized ciphertext block to the cryptographic unit 222 instead of the ciphertext block received from the cryptographic judgment unit 221.

When the combination of the content type 402 and the frame number 403 received are not stored in the inter-chunk chaining value holding unit 1316 in association in step S1940, the chaining judging unit 213 judges that the chunk held by the input buffer 201 is not in chaining (Step S1940: No), and outputs the content type 402 and the frame number 403 to the chaining value recording unit 228, and further outputs the chaining termination signal to the initialization vector selection unit 225.

Following receipt of the chaining termination signal from the chaining judging unit 213, the initialization vector selection unit 225 reads the initialization vector held by the initialization vector holding unit 224, and outputs the initialization vector to the chaining value selection unit 226.

When receiving the initialization vector from the initialization vector selection unit 225, the chaining value selection unit 226, already having received the initialization vector selection signal from the cryptographic judgment unit 221, outputs the initialization vector to the cryptographic unit 222 as the chaining value to be used by the cryptographic unit 222 (Step S1960).

Following this, the cryptographic judgment unit 221 reads the first ciphertext block of the chunk stored in the input buffer 201 and outputs the first ciphertext block to the pre-processing unit 1301. Following receipt of the ciphertext block, the pre-processing unit 1301 outputs the received ciphertext block at its original state to the cryptographic unit 222.

When the processing in steps S1980 and S1960 have been completed, the cryptographic unit 222 receives the first ciphertext block of the chunk from the pre-processing unit 1301.

Following receipt of the first ciphertext block, the cryptographic unit 222 decrypts the ciphertext block utilizing the key stored in the key holding unit 223 and the chaining value output from the chaining value selection unit 226, and outputs the plaintext block to the post-processing unit 1302. Further, the cryptographic unit 222 outputs a chaining value calculated while decrypting the ciphertext block to the chaining value recording unit 228 as the chaining value to be applied to the subsequent ciphertext block (Step S2000).

The post-processing unit 1302 judges that the plaintext block is a decrypted version of a ciphertext block which had been appended supplementary data thereto by the pre-processing unit 1301 (Step S2000: Yes), generates a synthesized plaintext block from which the portion corresponding to the appended supplementary data is removed, and outputs the synthesized plaintext block generated to the output selection unit 229 instead of the plaintext block received from the cryptographic judgment unit 221, when:
(1) the first ciphertext block size received from the fragment processing control unit 1300 is less than 128-bits, and when further receiving, from the cryptographic unit 222, a plaintext block resulting from the decryption of the first ciphertext block of the chunk held by the input buffer 201, or
(2) the last ciphertext block size received from the fragment processing control unit 1300 is less than 128-bits, and when further receiving from the cryptographic unit 222, a plaintext block resulting from the decryption of the last ciphertext block of the chunk held by the input buffer 201.

The post-processing unit 1302 when: (1) the first ciphertext block size received from the fragment processing control unit 1300 is 128-bits; (2) the last ciphertext block size received from the fragment processing control unit 1300 is 128-bits; and (3) the first ciphertext block size received from the fraction processing control unit is less than 128 bits and when further receiving a plaintext block resulting from the decryption of a ciphertext block besides the first and last ciphertext blocks of the chunk held by the input buffer 201 from the cryptographic unit 222, judges that the plaintext block received is a plaintext block resulting from the decryption of a ciphertext block to which supplementary data has not been appended by the pre-processing unit 1301 (Step S2000: No). Further in such cases, the post-processing unit 1302 outputs the plaintext block to the output selection unit 229 at its original state.

When the processing of either one of Steps S2010 and S2005: No is completed, the output selection unit 229 receives the plaintext block from the post-processing unit 1302.

Following receipt of the plaintext block from the cryptographic unit 222, the output selection unit 229 writes the plaintext block to the output buffer 202.

Following receipt of the chaining value from the cryptographic unit 222, the chaining value recording unit 228 increments the chaining value number counted by the chaining value number counter by "1". Further, the chaining value recording unit 228 compares the incremented chaining value number with the ciphertext block number received from the encryption size calculation unit 1311, and judges whether the chaining value received from the cryptographic unit 222 was output when the last ciphertext block of the chunk was decrypted by the cryptographic unit 222 (Step S2015).

When the incremented chaining value number is less than the ciphertext block number received from the encryption size calculation unit 1311 in Step S2015, the chaining value recording unit 228 judges that the chaining value is a chaining value output when a ciphertext block besides the last ciphertext block of the chunk was decrypted (Step S2015: No), and stores, by overwriting, the chaining value received from the cryptographic unit 222 to the in-chunk chaining value holding unit 227 (Step S2020). Further, the chaining value recording unit 228 outputs the ciphertext block request signal to the cryptographic judgment unit 221.

Following receipt of the ciphertext block request signal from the chaining value recording unit 228, the cryptographic judgment unit 221 outputs the subsequent ciphertext block to the pre-processing unit 1301, and outputs the chaining value selection signal to the chaining value selection unit 226.

In a case where the the last ciphertext block size received from the fragment processing control unit 1300 is less than 128 bits, and when receiving the last ciphertext block of the chunk held by the input buffer 201 from the cryptographic unit 222, the pre-processing unit judges that the subsequent ciphertext block is divided (Step S2025: Yes), and appends a number of "0"s equivalent to the number of bits short of 128 bits to the head portion of the subsequent ciphertext block to generate a 128-bit synthesized ciphertext block (Step S2030). Further, the pre-processing unit 1301 outputs the generated synthesized ciphertext block to the cryptographic unit 222 instead of the ciphertext block received from the cryptographic judgment unit 221.
When the last ciphertext block size received from the fragment processing control unit 1300 is 128-bits or when receiving a ciphertext block besides the last ciphertext block of the chunk held by the input buffer 201 from the cryptographic unit 222, the pre-processing unit 1301 judges that the subsequent ciphertext block is not divided (Step S2025: No), and outputs the ciphertext block received from the cryptographic judgment unit 221 at its original state to the cryptographic unit 222.

Following receipt of the chaining value selection signal, the chaining value selection unit 226 reads the chaining value held by the in-chunk chaining value holding unit 227 and outputs the chaining value to the cryptographic unit 222 (Step S2035).

When the processing of Step S2035 is completed, the processing of Step S2000 is launched once again.

When the incremented chaining value number is equivalent to the ciphertext block number received from the encryption size calculation unit 211 in Step S2015, the chaining value recording unit 228 judges that the chaining value was output when the last ciphertext block of the chunk was decrypted (Step S2015: Yes), and when the fragment data size is 128-bits, the chaining value recording unit 228 stores, by overwriting, the chaining value received from the cryptographic unit 222 to the inter-chunk chaining value holding unit 1316 in association with the content type, the frame number, and the fragment data size received from the chaining judging unit 213. When the fragment data size is less than 128-bits, the chaining value recording unit 228 stores, by overwriting, the chaining value which was previously input from the cryptographic unit 222 to the inter-chunk chaining value holding unit 1316 (Step S2040).

When the processing of Step S2040 is completed, the content decrypting apparatus 4000 enters standby state until a subsequent chunk is written to the input buffer 201 by the CPUA 111 or the CPUB 112 (Step S2050).

When a subsequent chunk is written to the input buffer 201 by the CPUA 111 or the CPUB 112 during a predetermined time interval, for instance 1ms (Step S2055: Yes), the processing of Step S1900 is launched once again.

When a subsequent chunk is not written to the input buffer 201 by the CPUA 111 or the CPUB 112 during a predetermined time interval, for instance 1ms (Step S1270: No), the content decrypting apparatus 4000 judges that no subsequent chunk exists in the content data 302, and terminates the content decrypting processing.

### [Embodiment 4]

In the following, description will be made on a content decrypting apparatus for decrypting content encrypted in the ciphertext block chaining mode, as one embodiment of the content decrypting apparatus pertaining to the present invention.

The content decrypting apparatus of the present embodiment is a modification of the content decrypting apparatus 2000 of Embodiment 1. In detail, modification has been made so that the content decrypting apparatus is capable of decrypting content having a data format in which the chunk header 311 of the chunk 310 is modified so as to include key information and initialization vector information therein. The chunk 310 is included in the content which is to be decrypted by the content decrypting apparatus 2000 of Embodiment 1.

The content decrypting apparatus pertaining to Embodiment 4 is a content decrypting apparatus in which modification has been made to the chunk information obtaining unit 210, the key storing unit 214, and the key setting unit 212 included in the content decrypting apparatus 2000 of Embodiment 1, and further modification has been made to newly include a key generation unit. Further, the content decrypting apparatus of Embodiment 4 is realized on the playback device 1000 of Embodiment 1, as is the content decrypting apparatus 2000.

In the following, description on aspects similar to those of Embodiment 1 will be omitted. Therefore, description will be made focusing on aspects which differ from Embodiment 1.

### <Structure>

### <Data Structure of the Content>

Content to be decrypted with use of the content decrypting apparatus 5000 of Embodiment 4 is content in which modification has been made to the content 300 of Embodiment 1, such that the chunk header 311 newly includes key information 2205 and initialization vector information 2206.

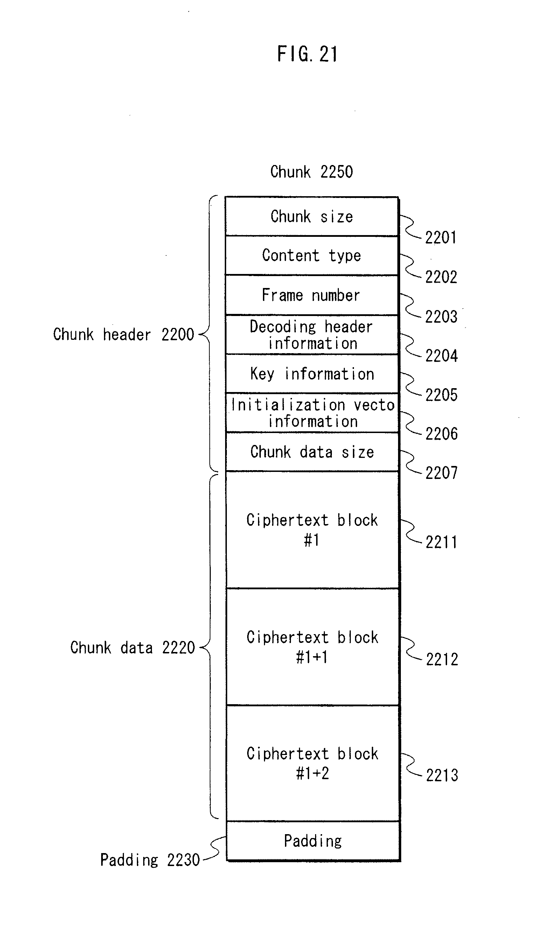

Fig. 21 is a structural diagram showing the data structure of a chunk 2250 constituting the content to be decrypted by the content decrypting apparatus 5000 of Embodiment 4.

The chunk 2250 includes a chunk header 2200, a chunk data 2220, and a padding 2230.

The chunk header 2200 is unencrypted data which includes a chunk size 2201 indicating the size of the chunk, a content type 2202 indicating the type of content, a frame number 2203 indicating the frame number, a decoding header information 2204 including information for decoding ESs, a key information 2205 for the generation of a key, an initialization vector information 2206 for the generation of an initialization vector, and a chunk data size 2207 indicating the size of the chunk data.

Among the data included in the chunk header 2200, the chunk size 2201, the content type 2202, the frame number 2203, the decoding header information 2204, and the chunk data size 2207 respectively correspond to the chunk size 401, the content type 402, the frame number 403, the decoding header information 404, and the chunk data size 405 of Embodiment 1.

In addition, the chunk size 2201, the content type 2202, the frame number 2203, the decoding header information 2204, the key information 2205, the initialization vector information 2206, and the chunk data size 2207, all of which are components of the chunk header 2200, each have fixed bit lengths and are arranged in a fixed order.

Here, the key information 2205 is information used to generate a key to be used for the decryption of the encrypted frame to which the chunk containing the key information 2205 belongs to. Similarly, the initialization vector information 2206 is information used to generate an initialization vector to be used for the decryption of an encrypted frame to which the chunk containing the initialization vector information 2206 belongs to.

### <Content Decoding Apparatus5000>

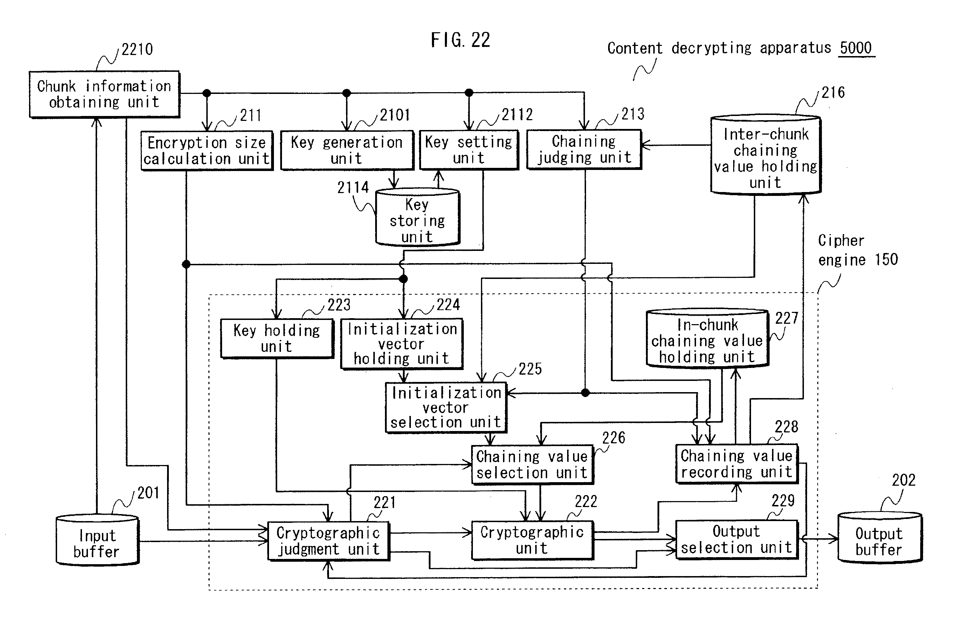

Fig. 22 is a block diagram showing the functional structure of the content decrypting apparatus 5000.

The content decrypting apparatus 5000 differs from the content decrypting apparatus 2000 of Embodiment 1 in that the chunk information obtaining unit 210 is modified into the chunk information obtaining unit 2110, the key storing unit 214 is modified into a key storing unit 2114, the key setting unit 212 is modified into a key setting unit 2112, and a key generation unit 2101 has been newly added thereto.

The chunk information obtaining unit 2110 obtains the start address of the chunk held by the input buffer 201, and further obtains the chunk size 2201, the chunk data size 2207, the content type 2202, the frame number 2203, the key information 2205, and the initialization vector information 2206 from the chunk header 2200. After having obtained all such information, the chunk information obtaining unit 2110 outputs the chunk start address, the chunk size 2201, and the chunk data size 2207 to the encryption size calculation unit 211, outputs the content type 2202 and the frame number 2203 to the key setting unit 212 and the chaining judging unit 213, and outputs the content type 2202, the frame number 2203, the key information 2205, and the initialization vector information 2206 to the key generation unit 2101.

When the CPUA 111 or the CPUB 112 writes a content header 301 to the input buffer 201, the chunk information obtaining unit 2110 outputs, to the cipher engine 150, a content header signal indicating that the data held by the input buffer 201 is the content header 301.

Following receipt of the content type 2202, the frame number 2203, the key information 2205, and the initialization vector information 2206 from the chunk information obtaining unit 2110, the key generation unit 2101 generates a key using the key information 2205 and an initialization vector using the initialization vector information 2206. Following this, the key generation unit 2101 stores the content type 2202, the frame number 2203, the generated key, and the generated initialization vector to the key storing unit 2114 in association.

Further, the key generation unit 2101 decrypts the key information 2205 when the key information received is encrypted, and similarly decrypts the initialization vector information 2206 when the initialization vector information received is encrypted.

The key storing unit 2114 is a storage area for storing combinations of a content type, a frame number, a key, and an initialization vector in association, and is mounted as a part of the memory block 120.

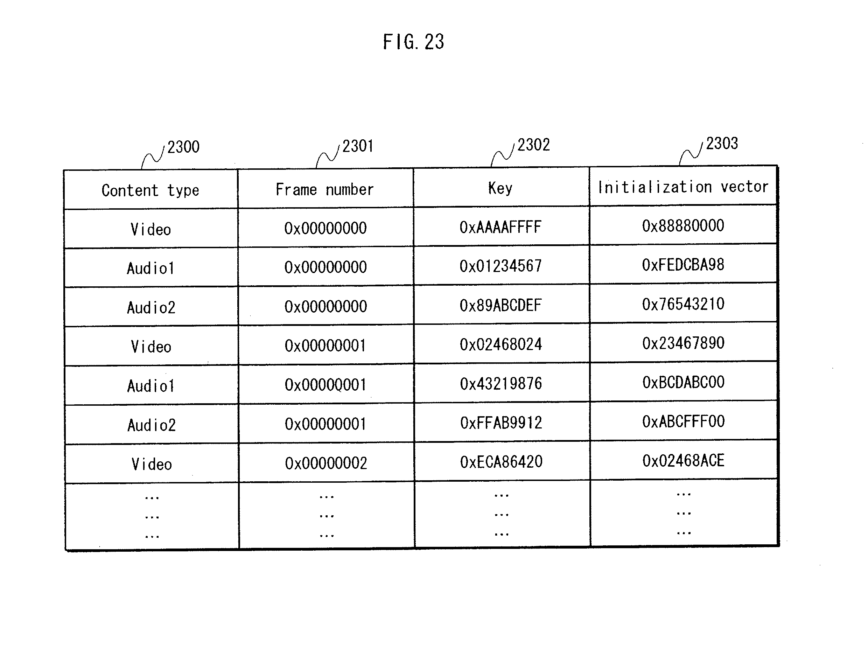

Fig. 23 is a diagram showing the information stored by the key storing unit 2114.

As is shown in Fig. 23, the key storing unit 2114 stores combinations of a content type, a frame number, a key, and an initialization vector in association. The content types, the frame numbers, the keys, and the initialization vectors are respectively listed in rows 2300, 2301, 2302, and 2303.

Following receipt of the content type 2202 and the frame number 2203 from the chunk information obtaining unit 2110, the key setting unit 2112 reads the key listed in row 2302 and the initialization vector listed in row 2302 which are associated with the combination of the content type 2202 and the frame number 2203 received from the key storing unit 2114. Following this, the key setting unit 2112 outputs the key listed in row 2302 and the initialization vector listed in row 2303 to the cipher engine 150.

In the following, description will be made on the details of the operations of the content decrypting apparatus 5000 having the above structures, with reference to the accompanying drawings.

### <Operations>

When playback processing of content is launched by the playback device 1000, first the CPUA 111 or the CPUB 112 writes a content header of the content to be decrypted to the input buffer 201. The content to be decrypted is recorded onto the external recording medium 137, the internal hard disk of the hard disk device 131, or the RAM 122.

From this point and on, the CPUA 111 or the CPUB 112 writes chunks constituting the content data to the input buffer 201, starting from the first chunk and ending at the final chunk.

When the content header 301 has been written to the input buffer 201, the content decrypting apparatus 5000 launches content decryption processing.

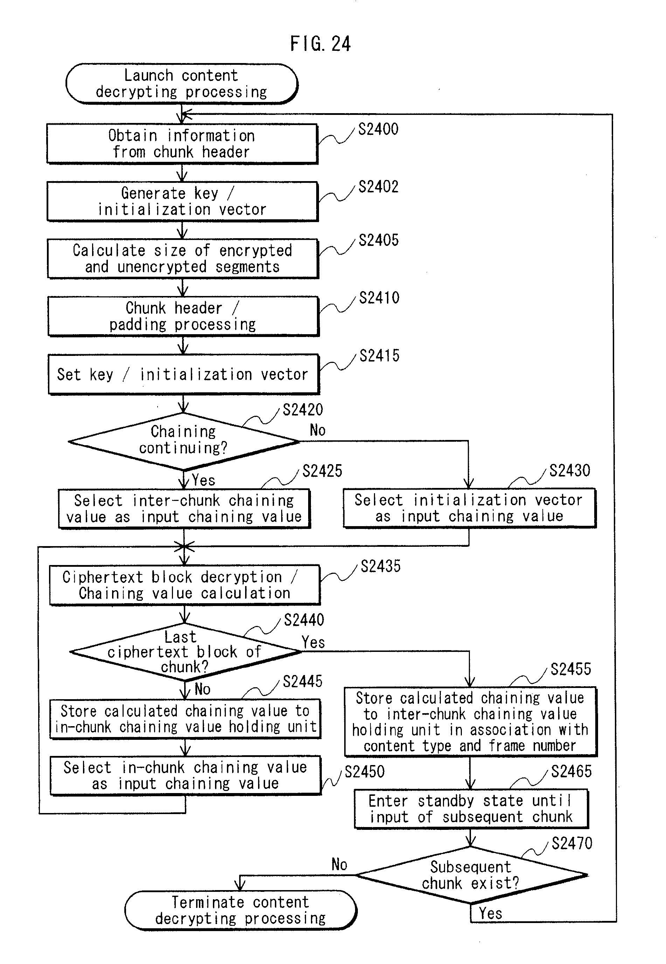

Figs. 24 is a flowchart showing the content decrypting processing performed by the content decrypting apparatus 5000.

When the content decrypting apparatus 5000 launches the content decrypting processing, the chunk information obtaining unit 2110 outputs a content header signal to the cryptographic unit 222. The cryptographic unit 222 receives the content header signal.

Following receipt of the content header signal, the cryptographic unit 222 reads the content header 301 from the input buffer 201 and outputs the content header 301 to the output selection unit 229. The output selection unit 229 writes the received content header 301 to the output buffer 202.

When a chunk has been written to the input buffer 201 by the CPUA 111 or the CPUB 122, the chunk information obtaining unit 2110 obtains the start address of the chunk held by the input buffer 201, and further obtains the chunk size 2201, the chunk data size 2207, the content type 2202, the frame number 2203, the key information 2205, and the initialization vector information 2206 from the chunk header 2200 (Step S2400). After having obtained all such information, the chunk information obtaining unit 2110 outputs the chunk start address, the chunk size 2201, and the chunk data size 2207 to the encryption size calculation unit 211, outputs the content type 2202 and the frame number 2203 to the key setting unit 2112 and the chaining judging unit 213, and outputs the frame number 2203, the key information 2205, and the initialization vector information 2206 to the key generation unit 2101.

Following receipt of the content type 2202, the frame number 2203, the key information 2205, and the initialization vector information 2206 from the chunk information obtaining unit 2110, the key generation unit 2101 generates a key using the key information 2205 and generates an initialization vector using the initialization vector information 2206. Following this, the key generation unit 2101 stores the content type 2202, the frame number 2203, the generated key, and the generated initialization vector to the key storing unit 2114 in association (Step S2402).

Following receipt of the chunk start address, the chunk size 2201, and the chunk data size 2207 from the chunk information obtaining unit 2110, the encryption size calculation unit 211 calculates the start address of the padding 2230, the chunk end address, and the ciphertext block number indicating the number of ciphertext blocks included in the chunk data 2220 (Step S2405). Further, the encryption size calculation unit 211 outputs the chunk start address, the start address of the padding 2230, and the chunk end address to the cryptographic judgment unit 221, and outputs the ciphertext block number to the chaining value recording unit 228.

Following receipt of the ciphertext block number from the encryption size calculation unit 211, the chaining value recording unit 228 resets the chaining value number counted by the chaining value number counter.

Following receipt of the chunk start address, the start address of the padding 2230, and the chunk end address from the encryption size calculation unit 211, the cryptographic judgment unit 221 reads the chunk header 2200 and the padding 2230 from the input buffer 201 and outputs the chunk header 2200 and the padding 2230 to the output selection unit 229. Following receipt of the chunk header 2200 and the padding 2230, the output selection unit 229 writes the chunk header 2200 and the padding 2230 to the output buffer 202 (Step S2410), and outputs the initialization vector selection signal to the chaining value selection unit 226.

Following receipt of the content type 2202 and the frame number 2203 from the chunk information obtaining unit 2210, the key setting unit 2112 reads the key listed in row 2302 and the initialization vector listed in row 2303 which are associated with the combination of the content type 2202 and the frame number 2203 received from the key storing unit 214. Further, the key setting unit 2112 outputs the key listed in row 2302 to the key holding unit 223, and outputs the initialization vector listed in row 2303 to the initialization vector holding unit 224. Following this, the key holding unit 223 stores, by overwriting, the key, and the initialization vector holding unit 224 stores, by overwriting, the initialization vector (Step S2415).

The procedures of steps S2420 through S2465 following this point are similar to the processing of steps S820 through S865 of the operations of the content decrypting apparatus 2000 of Embodiment 1, and therefore description thereof will be omitted.

Note that individually, Step S2420 corresponds to Step S820, Step S2425 corresponds to Step S825, Step S2430 corresponds to Step S830, Step S2435 corresponds to Step S835, Step S2440 corresponds to Step S840, Step S2445 corresponds to Step S845, Step S2450 corresponds to Step S850, Step S2455 corresponds to Step S855, and Step S2465 corresponds to Step S865.

When a subsequent chunk is written to the input buffer 201 by the CPUA 111 or the CPUB 112 during a predetermined time interval, for instance 1ms, after the content decrypting apparatus 5000 enters standby state in Step S2465 (Step S2470: Yes), the processing of Step S2400 is launched once again.

When a subsequent chunk is not written to the input buffer 201 by the CPUA 111 or the CPUB 112 during a predetermined time interval, for instance 1ms (Step S2470: No), the content decrypting apparatus 5000 judges that no subsequent chunk exists in the content data 302, and terminates the content decrypting processing.

### [Embodiment 5]

In the following, description will be made on a content decrypting apparatus for decrypting content encrypted in the ciphertext block chaining mode, as one embodiment of the content decrypting apparatus pertaining to the present invention.

The content decrypting apparatus of Embodiment 5 is a modification of the content decrypting apparatus 2000 of Embodiment 1. In detail, modification has been made so that the content decrypting apparatus includes a first processing unit for reading and storing information included in the chunk headers of each of the chunks included in the content to be decrypted, and a second processing unit for decrypting the content with use of the information included in the chunk headers stored by the first processing unit. The content to be decrypted by the content decrypting apparatus of Embodiment 5 has a similar data format as the content decrypted by the content decrypting apparatus 2000 of Embodiment 1.

The content decrypting apparatus pertaining to Embodiment 5 of the present invention is a content decrypting apparatus in which modification has been made to each of the chunk information obtaining unit 210, the encryption size calculation unit 211, the chaining judging unit 213, the key setting unit 212, the cryptographic judgment unit 221, the initialization vector selection unit 225, and the chaining value recording unit 228 included in the content decrypting apparatus 2000, and further modification has been made to newly include a cryptographic information accumulation unit and a frame number accumulation unit. Further, the content decrypting apparatus of Embodiment 5 is realized on a playback device which is obtained by modifying the playback device 1000 of Embodiment 1 such that the cipher engine 150 is replaced by a cipher engine 2550 obtained by partial modification thereof.

In the following, description on aspects similar to those of Embodiment 1 will be omitted. Therefore, description will be made focusing on aspects which differ from Embodiment 1.

### <Structure>

### <Content Decoding Apparatus 6000>

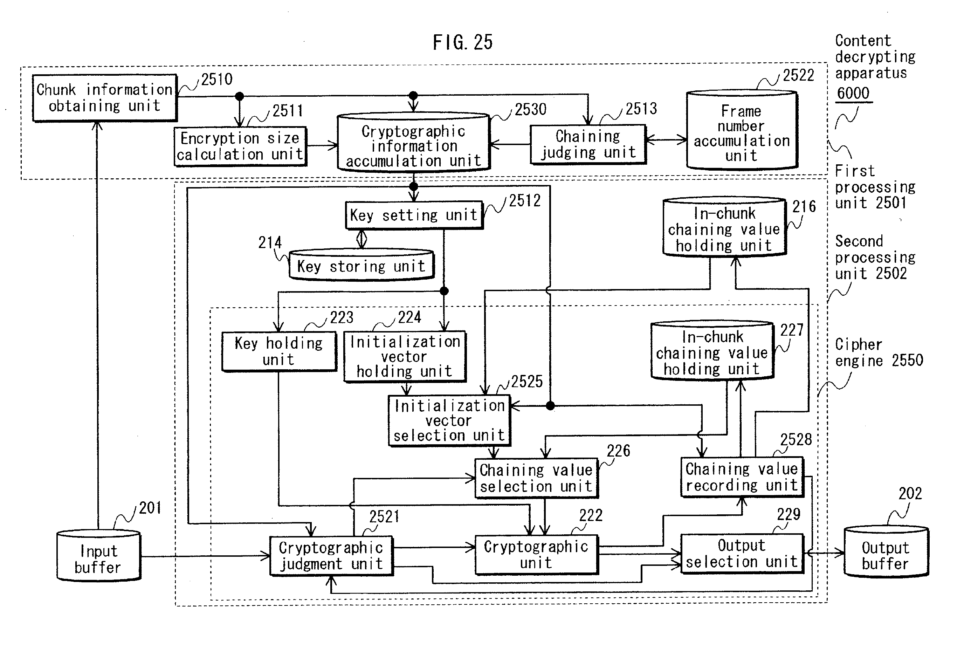

Fig. 25 is a block diagram showing the functional structure of the content decrypting apparatus 6000.

The content decrypting apparatus 6000 differs from the content decrypting apparatus 2000 of Embodiment 1 in that the chunk information obtaining unit 210 is modified into a chunk information obtaining unit 2510, the encryption size calculation unit 211 is modified into an encryption size calculation unit 2511, the chaining judging unit 213 is modified into a chaining judging unit 2513, the key setting unit 212 is modified into a key setting unit 2512, the cryptographic judgment unit 221 is modified into a cryptographic judgment unit 2521, the initialization vectors selection unit 225 is modified into an initialization vector selection unit 2525, the chaining value recording unit 228 is modified into a chaining value recording unit 2528, and a cryptographic information accumulation unit 2530 and a frame number accumulation unit 2522 have been newly added thereto.

The chunk information obtaining unit 2510 obtains the start address of the chunk held by the input buffer 201 and further obtains the chunk size 401, the chunk data size 405, the content type 402, and the frame number 403 from the chunk header 311. Having obtained all such information, the chunk information obtaining unit 2510 outputs the chunk start address, the chunk size 401, and the chunk data size 405 to the encryption size calculation unit 2511, outputs the content type 402 and the frame number 403 to the chaining judging unit 213, and stores the content type 402 and the frame number 403 to the cryptographic information accumulation unit 2530 in association.

Following receipt of the chunk start address, the chunk size 401, and the chunk data size 405 from the chunk information obtaining unit 2510, the encryption size calculation unit 2511 calculates the start address of the chunk data 312, the start address of the padding 313, the chunk end address, and the ciphertext block number inidicating the number of ciphertext blocks contained in the chunk data 312, and stores the start address of the chunk data 312, the start address of the padding 313, the chunk end address, and the ciphertext block number to the cryptographic information accumulation unit 2530 in association with the combination of the content type 402 and the frame number 403 stored thereto by the chunk information obtaining unit 2510.

More specifically, the start address of the chunk data 312 is calculated by adding the fixed bit count of the chunk header 311 to the chunk start address. The start address of the padding 313 is calculated by adding the chunk data size 405 to the start address of the chunk header 311. The chunk end address is calculated by adding the chunk size 401 to the chunk start address. The number of ciphertext block is calculated by dividing the chunk data size 405 by the unit bit count "128" of a single ciphertext block.

The frame number accumulation unit 2522 is a storage area for storing combinations of a content type and a frame number, and is mounted as a part of the memory block 120.

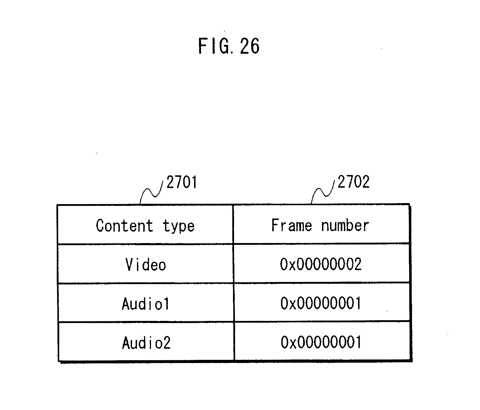

Fig. 26 is a diagram showing the information stored by the frame number accumulation unit 2522.

As is shown in Fig. 26, the frame number accumulation unit 2522 stores a frame number in association with each of the content types, the Video, the Audio 1, and the Audio 2. The contents types and the frame numbers corresponding thereto are respectively listed in rows 2701 and 2702.

In detail, a frame number listed in row 2702 indicates the frame number of the newest frame among a plurality of frames obtained by the chunk information obtaining unit 2510, of each of the content types listed in row 2701.

Following receipt of the combination of the content type 402 and the frame number 403 from the chunk information obtaining unit 2510, the chaining judging unit 2513 judges whether the combination of the content type 402 and the frame number 403 is stored in association in the frame number accumulation unit 2522. When the combination is stored in association, the chaining judging unit 2513 judges that the chunk held by the input buffer 201 is in chaining, whereas when the combination is not stored in association, the chaining judging unit 2513 judges that the chunk held by the input buffer 201 is not in chaining.

When judging that the chunk is in chaining, the chaining judging unit 2513 stores a chaining continuance signal to the cryptographic information accumulation unit 2530, in association with the combination of the content type 402 and the frame number 403 stored thereto by the chunk information obtaining unit 2510. When judging that the chunk is not in chaining, the chaining judging unit 2513 updates the information held by the frame number accumulation unit 2522, by updating a frame number listed in row 2702 corresponding to a content type listed in row 2701 corresponding to the content type input from the chunk information obtaining unit 2510. Further, the chaining judging unit 2513 stores a chaining termination signal to the cryptographic information accumulation unit 2530 in association with the combination of the content type 402 and the frame number 403 stored thereto by the chunk information obtaining unit 2510.

The cryptographic information accumulation unit 2530 is a storage area for storing a combination of a chunk start address, a content type, a frame number, a chunk data start address, a ciphertext block number, a padding start address, a chunk end address, and a chaining/non-chaining information indicating the existence or non-existence of "chaining", for each of the chunks constituting the content to be decrypted. All such information is stored in association with each other, and is arranged in the order in which the chunks are arranged in the content. In addition, the cryptographic information accumulation unit 2530 is mounted as a part of the memory block 120.

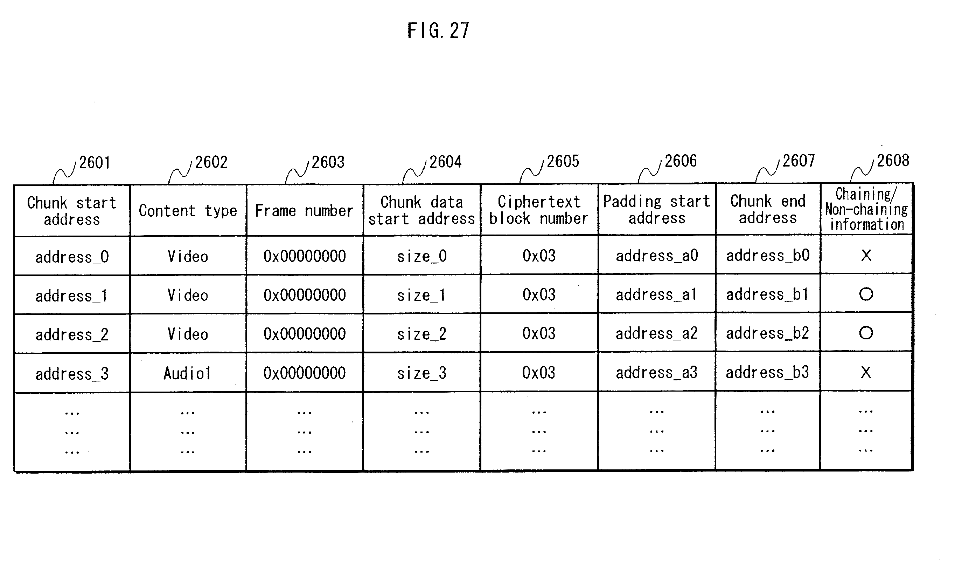

Fig. 27 is a diagram showing the information stored by the cryptographic information accumulation unit 2530.

As is shown is Fig. 27, the cryptographic information accumulation unit 2530 stores a combination of a chunk start address, a content type, a frame number, a chunk data start address, a ciphertext block number, a padding start address, a chunk end address, and a chaining/non-chaining information for each of the chunks constituting the content to be decrypted, in the order in which the chunks are arranged in the content. More specifically, the chunk start addresses, the content types, the frame numbers, the chunk data start addresses, the ciphertext block numbers, the padding start addresses, the chunk end addresses, and the chaining/non-chaining informations are respectively listed in rows 2601, 2602, 2603, 2604, 2605, 2606, 2607 , and 2608.

The key setting unit 2512 reads the content type listed in row 2602 from the cryptographic information accumulation unit 2530 in the order in which the chunks are arranged, and reads the key listed in row 502 and the initialization vector listed in row 503 which are stored onto the key storing unit 214 in association with the content type listed in row 2602.

The cryptographic judgment unit 2521 reads and outputs, to the output selection unit 229, the chunk header 311 and the padding 313 of each of the chunks held by the input buffer 201. Similarly, the cryptographic judgment unit 2521 reads and outputs, to the cryptographic unit 222, the chunk data 312 of each of the chunks held by the input buffer 201 in units of ciphertext blocks. The reading and outputting of all such information is performed in the order in which the chunks are arranged in the content, and by referring to the chunk start address listed in row 2601, the chunk data start address listed in row 2604, the padding start address listed in row 2606, and the chunk end address listed in row 2607 for each of the chunks, all such information being stored in the cryptographic information accumulation unit 2530. Further, when the ciphertext block output to the cryptographic unit 222 is the first ciphertext block of the chunk, the cryptographic judgment unit 2521 outputs an initialization value selection signal to the chaining value selection unit 226, whereas when the ciphertext block output to the cryptographic unit 222 is a ciphertext block besides the first ciphertext block of the chunk, the cryptographic judgment unit 2521 outputs a chaining value selection signal to the chaining value selection unit 226.

The judgment of whether the ciphertext block is the first ciphertext block of the chunk or not is made according to the chunk data start address listed in row 2604.

The initialization vector selection unit 2525 reads, in the order in which the chunks are arranged, a combination of the chaining/non-chaining information listed in row 2608 and the content type listed in row 2602 for each of the chunks from the cryptographic information accumulation unit 2530. When the chaining/non-chaining information listed in row 2608 indicates "chaining", the initialization vector selection unit 2525 reads a chaining value stored in association with the content type listed in row 2602 from the inter-chunk chaining value holding unit 216, and outputs the chaining value to the chaining value selection unit 226. When the chaining/non-chaining information listed in row 2608 indicates "no chaining", the initialization vector selection unit 2525 reads the initialization vector held by the initialization vector holding unit 224, and outputs the initialization vector to the chaining value selection unit 226.

The chaining value recording unit 2528 reads, in the order in which the chunks are arranged, the ciphertext block number listed in row 2605, the content type listed in row 2602, and the frame number listed in row 2603 for each of the chunks from the cryptographic information accumulation unit 2530. Further, when receiving a chaining value output from the cryptographic unit 222, the chaining value recording unit 2528 stores the chaining value to either the inter-chunk chaining value holding unit 216 or the in-chunk chaining value holding unit 227.

When the chaining value received from the cryptographic unit 222 is a chaining value obtained when the cryptographic unit 222 decrypted the last ciphertext block of the chunk, the chaining value recording unit 2528 stores, by overwriting, the chaining value to the inter-chunk chaining value holding unit 216 in association with the content type listed in row 2602 and the frame number listed in row 2603 read from the cryptographic information accumulation unit 2530. When the chaining value received from the cryptographic unit 222 is a chaining value obtained when the cryptographic unit 222 decrypted a ciphertext block besides the last ciphertext block of the chunk, the chaining value recording unit 2528 stores, by overwriting, the chaining value to the in-chunk chaining value holding unit 227 and outputs a ciphertext block request signal to the cryptographic judgment unit 2521.

The chaining value recording unit 2528 is provided with a chaining value number counter for counting the number of chaining values input thereto. The chaining value number counter is used to judge whether the chaining value received from the cryptographic unit 222 is a chaining value obtained when the cryptographic unit 222 decrypted the last ciphertext block of the chunk.

The chaining value number counter is reset every time the chaining value recording unit 2528 reads a ciphertext block number 2605 from the cryptographic information accumulation unit 2530.

When receiving a chaining value from the cryptographic unit 222, the chaining value recording unit 2528 increments the chaining value number counted by the chaining value number counter by 1. When the incremented chaining value number is smaller than the ciphertext block number listed in row 2605 received from the encryption size calculation unit 2511, the chaining value recording unit 2528 judges that the chaining value was output when a ciphertext block besides the last ciphertext block of the chunk was decrypted. Further, when the incremented chaining number is equivalent to the ciphertext block number listed in row 2605 received from the encryption size calculation unit 2511, the chaining value recording unit 2528 judges that the chaining number was output when the last ciphertext block of the chunk was decrypted.

The cipher engine 2550 differs from the cipher engine 150 of Embodiment 1 in that the cryptographic judgment unit 221 is modified into the cryptographic judgment unit 2521, the initialization vector selection unit 225 is modified into the initialization vector selection unit 2525, and the chaining value recording unit 228 is modified into the chaining value recording unit 2528.

The first processing unit 2501 includes the chunk information obtaining unit 2510, the encryption size calculation unit 2511, the chaining judging unit 2513, the cryptographic information accumulation unit 2530, and the frame number accumulation unit 2522, and is controlled by the CPUA 111.

The first processing unit 2501 performs chunk data accumulation processing, where the first processing unit 2501 obtains information necessary for decrypting the content from the chunk header of each of the chunks constituting the content in the order in which the chunks are arranged, and accumulates such information to the cryptographic information accumulation unit 2530.

The second processing unit 2502 includes the key setting unit 2512, the key storing unit 214, the inter-chunk chaining value holding unit 216, and the cipher engine 2250 and is controlled by the CPUB 112.

The second processing unit 2502 performs content decrypting processing where the second processing unit 2502 reads the information necessary for decrypting the content from the cryptographic information accumulation unit 2530 of the first processing unit, and decrypts content using the information obtained.

In the following, description will be made on the details of the operations of the content decrypting apparatus 6000 having the above structure, with reference to the accompanying drawings.

### <Operations>

When playback processing of content is launched by the playback device 1000, first the CPUA 111 or the CPUB 112 writes a content header 301 of the content to be decrypted to the input buffer 201. The content to be decrypted is recorded onto the external recording medium 137, the internal hard disk of the hard disk device 131, or the RAM 122.

From this point and on, the CPUA 111 or the CPUB 112 writes chunks constituting the content data to the input buffer 201, starting from the first chunk and ending at the final chunk.

When the content header 301 has been written to the input buffer 201, the first processing unit 2501 of the content decrypting apparatus 6000 obtains, in the order in which the chunks are arranged, information necessary for decrypting the content from the chunk header of each of the chunks constituting the content, and stores the information to the cryptographic information accumulation unit 2530.

When the first processing unit 2501 completes the chunk data accumulation processing, the CPUA 111 or the CPUB 112 writes the content header 301 to the input buffer 201 once again. From this point and on, the CPUA 111 or the CPUB 112 writes chunks constituting the content data to the input buffer 201, starting from the first chunk and ending at the final chunk.

When the content header 301 has been written to the input buffer 201 for a second time, the second processing unit 2502 of the content decrypting apparatus 6000 launches the content decrypting processing.

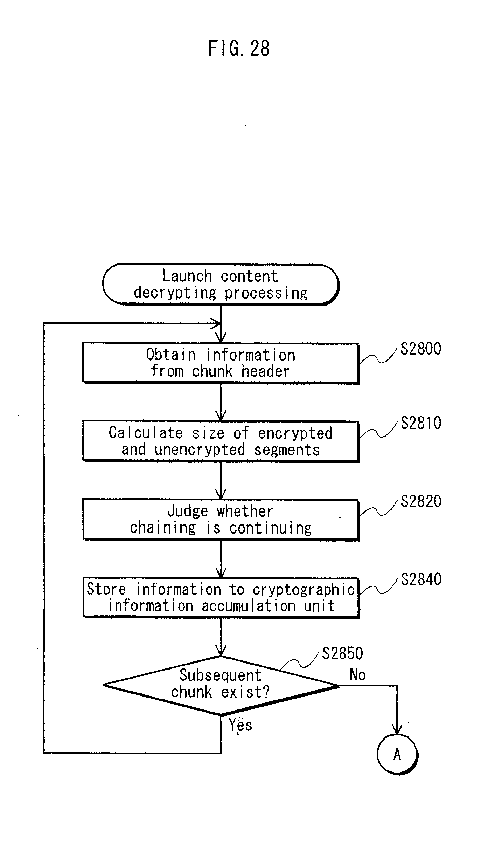

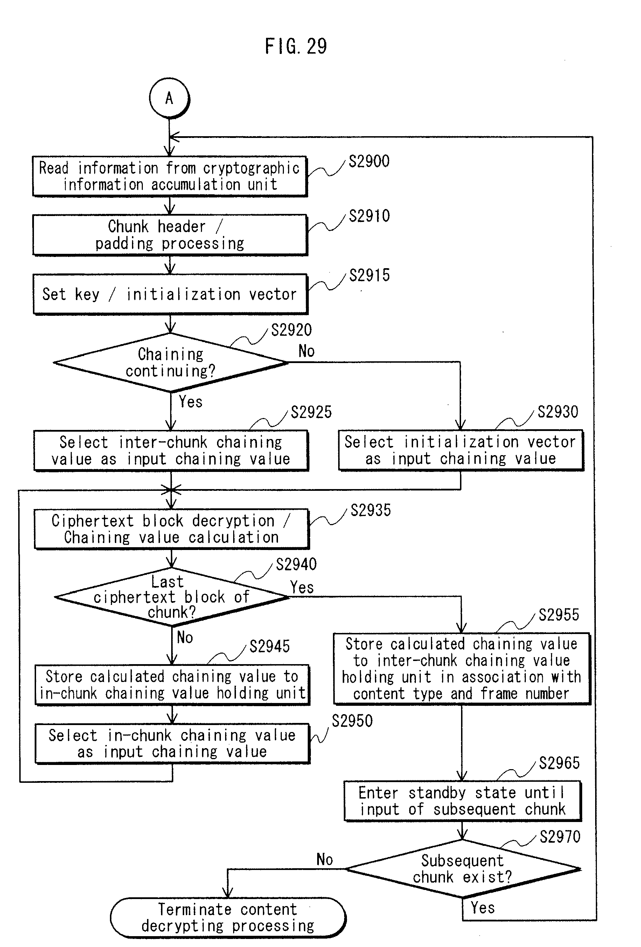

Figs. 28 and 29 are flowcharts showing the content decrypting processing performed by the content decrypting apparatus 6000.

When the first processing unit 2501 of the content decrypting apparatus 6000 launches reading of the chunk header information, the chunk information obtaining unit 2510 outputs a content header signal to the cryptographic judgment unit 2521. The cryptographic judgment unit 2521 receives the content header signal.

Following receipt of the content header signal, the cryptographic judgment unit 2521 reads the content header 301 from the input buffer 201 and outputs the content header 301 to the output selection unit 229. The output selection unit 229 writes the content header 301 to the output buffer 202.

When a chunk has been written to the input buffer 201 by the CPUA 111 or the CPUB 112, the chunk information obtaining unit 2510 obtains the start address of the chunk held by the input buffer 201, and further obtains the chunk size 401, the chunk data size 405, the content type 402, and the frame number 403 from the chunk header 311 (Step S2800). Having obtained such information, the chunk information obtaining unit 2510 outputs the chunk start address, the chunk size 401, and the chunk data size 405 to the encryption size calculation unit 2511, outputs the content type 402 and the frame number 403 to the chaining judging unit 2513, and stores the content type 402 and the frame number 403 to the cryptographic information accumulation unit 2530 in association.

Following receipt of the chunk start address, the chunk size 401, and the chunk data size 405 from the chunk information obtaining unit 2510, the encryption size calculation unit 2511 calculates the start address of the chunk data 312, the start address of the padding 313, the chunk end address, and the ciphertext block number indicating the number of ciphertext blocks contained in the chunk data 312 (Step S2810).

The chaining judging unit 2513 judges whether the combination of the content type 402 and the frame number 403 received from the chunk information obtaining unit 2510 is stored in the frame number accumulation unit 2522 in association (Step S2820). When the combination is not stored in association, the chaining judging unit 2513 updates the frame number listed in row 2702 in association with the content type listed in row 2701 which corresponds to the content type received from the chunk information obtaining unit 2510. The frame number listed in row 2702 to be updated here is stored in the frame number accumulation unit 2522.

The encryption size calculation unit 2511 stores the chunk data start address, the padding start address, the chunk end address, and the ciphertext block number to the cryptographic information accumulation unit 2530, in association with the combination of the content type and the frame number stored by the chunk information obtaining unit 2510. Further, when the combination is stored in association in Step S2820, the chaining judging unit 2513 stores a chaining continuance signal to the cryptographic information accumulation unit 2530 in association with the combination of the content type 402 and the frame number 403 stored by the chunk information obtaining unit 2510, and when the combination is not stored in association in Step S2820, the chaining judging unit 2513 stores a chaining termination signal to the cryptographic information accumulation unit 2530 in association with the combination of the content type 402 and the frame number 403 stored by the chunk information obtaining unit 2510 (Step S2840).

When the processing of Step S2840 is completed, the content decrypting apparatus 6000 enters standby state until the CPUA 111 or the CPUB 112 writes a subsequent chunk to the input buffer 201 (Step S2850).

When a subsequent chunk is written to the input buffer 201 by the CPUA 111 or the CPUB 112 during a predetermined time interval, for instance 1ms (Step S2850: Yes), the processing of Step S2800 is launched once again.

When a subsequent chunk is not written to the input buffer 201 by the CPUA 111 or the CPUB 112 during a predetermined interval, for instance 1ms (Step S2850: No), the first processing unit 2501 judges that no subsequent chunk exists in the content data 302, and terminates the chunk data accumulation processing.

When the first processing unit 2501 terminates the chunk data accumulation processing, the CPUA 111 or the CPUB 112 writes the content header 301 to the input buffer 201 once again. And from this point and on, the CPUA 111 or the CPUB 112 writes chunks of the content to the input buffer 201, starting from the first chunk and ending at the final chunk.

When the content header 301 has been written to the input buffer 201 for a second time, the second processing unit 2502 of the content decrypting apparatus 6000 launches the content decrypting processing.

When the content decrypting apparatus 6000 launches the content decrypting processing, the cryptographic judgment unit 2521 reads the content header 301 from the input buffer 201, and outputs the content header 301 to the output selection unit 229. The output selection unit 229 writes the content header 301 to the output buffer 202.

When a chunk has been written to the input buffer 201 by the CPUA 111 or the CPUB 112, reading of information associated with the chunk and stored by the cryptographic information accumulation unit 2530 is performed as follows: the cryptographic judgment unit 2521 reads the chunk start address listed in row 2601, the padding start address listed in row 2606, and the chunk end address listed in row 2607; the key setting unit 2512 reads the content type listed in row 2602; the initialization vector selection unit 2525 reads the chaining/non-chaining information listed in row 2608 and the content type listed in row 2602; the chaining value recording unit 2528 reads the ciphertext block number listed in row 2605, the content type listed in row 2602, and the frame number listed in row 2603. In addition, the chaining value recording unit 2258 resets the chaining value number counted by the chaining value number counter (Step S2900).

Following receipt of the chunk start address listed in row 2601, the padding start address listed in row 2606, and the chunk end address listed in row 2607 from the cryptographic information accumulation unit 2530, the cryptographic judgment unit 2521 reads the chunk header 311 and the padding 313 from the input buffer 201 and outputs the chunk header 311 and the padding 313 to the output selection unit 229. The output selection unit 229 writes the chunk header 311 and the padding 313 to the output buffer 202 (Step S2910), and outputs an initialization vector selection signal to the chaining value selection unit 226.

Following receipt of the content type listed in row 2602 from the cryptographic information accumulation unit 2530, the key setting unit 2512 reads, from the key storing unit 214, the key listed in row 502 and the initialization vector listed in row 503 corresponding with the content type listed in row 2602. Further, the key setting unit 2512 outputs the key 502 to the key holding unit 223, and outputs the initialization vector 503 to the initialization vector holding unit 224. Following this, the key holding unit 223 stores, by overwriting, the key, and the initialization vector holding unit 224 stores, by overwriting, the initialization vector (Step S2915).

Additionally, the initialization vector selection unit 2525 reads the combinations of the chaining/non-chaining information listed in row 2608 and the content type listed in row 2602 stored in association with each of the chunks from the cryptographic information accumulation unit 2530, in the order in which the chunks are arranged (Step S2920). When the chaining/non-chaining information listed in row 2608 indicates "chaining" (Step S2920: Yes), the initialization vector selection unit 2525 reads the chaining value stored in association with the content type listed in row 2602 from the inter-chunk chaining value holding unit 216 and outputs the chaining value to the chaining value selection unit 226.

The chaining value selection unit 226, already having received an initialization vector selection signal from the cryptographic judgment unit 2521, selects the chaining value received from the initialization vector selection unit 2525 and outputs the selected chaining value to the cryptographic unit 222 (Step S2925).

When the chaining/non-chaining information listed in row 2608 indicates "no chaining" in step S2920 (Step S2920: No), the initialization vector selection unit 2525 reads the initialization vector held by the initialization vector holding unit 224 and outputs the initialization vector to the chaining value selection unit 226.

Following receipt of the initialization vector from the initialization vector selection unit 2525, the chaining value selection unit 226, already having received the initialization vector selection signal from the cryptographic unit 2521, outputs the initialization vector to the cryptographic unit 222 as the chaining value to be used thereby (Step S2930).

The procedures of steps S2935 through S2965 following the completion of either Step S2925 or S2930 are similar to the procedures of steps S835 through S865 of the operations of the content decrypting apparatus 2000 of Embodiment 1, and therefore description thereof will be omitted.

Note that individually, Step S2935 corresponds to Step S835, Step S2940 corresponds to Step S840, Step S2945 corresponds to Step S845, Step S2950 corresponds to Step S850, Step S2955 corresponds to Step S855, and Step S2965 corresponds to Step S865.

When a subsequent chunk is written to the input buffer 201 by the CPUA 111 or the CPUB 112 during a predetermined interval, for instance 1ms, after the second processing unit 2502 enters standby state in Step S2965 (Step S2970: Yes), the second processing unit 2502 launches the processing of Step S2900 once again.

When a subsequent chunk is not written to the input buffer 201 by the CPUA 111 or the CPUB 112 during a predetermined interval, for instance 1ms (Step S2970: No), the second processing unit 2502 judges that no subsequent chunk exists in the content data 302, and terminates the content decrypting processing.

### <Modifications>

In the above, description has been made on embodiments of the content decrypting apparatus pertaining to the present invention which is capable of correctly decrypting data streams, the data streams having a data structure in which a ciphertext chunk belonging to a first encrypted frame (for instance, an encrypted audio frame) are disposed in between two ciphertext chunks belonging to a second encrypted frame (for instance, an encrypted video frame). However, the present invention is not limited to this. Hereinafter, description will be made on various modifications which are considered as being included within the technical idea of the present invention.
(1) In Embodiment 1, although description has been made that the CPU block 110 is composed of 2 CPUs, the CPUA 111 and the CPUB 112, the present invention is not limited to this. The number of CPUs composing the CPU block may be 1, or more than 2. Furthermore, the CPU block 110 may be composed of a single dual-core processor, or a single quad-core processor.
(2) In Embodiment 1, although description has been made that the ROM 121 is a ROM, the present invention is not limited to this, and the ROM 121 may include a computer readable/writeable non-volatile memory.
(3) In Embodiment 1, although description has been made that the cipher engine 150 is a DSP, the present invention is not limited to this. The cipher engine 150 may have a structure which is realized by the CPUA 111 or the CPUB 112 executing a software, a structure which is realized by a CPU besides CPUA 111 and CPUB 112 executing a software, or a structure which is realized by introduction of ASIC and FPGA integrated circuits and the like.

Similarly, in Embodiment 1, although description has been made that the AV decoder 160 is a DSP, the present invention is not limited to this. The AV decoder 160 may have a structure which is realized by the CPUA 111 or the CPUB 112 executing a software, a structure which is realized by a CPU besides CPUA 111 and CPUB 112 executing a software, or a structure which is realized by introduction of ASIC and FPGA integrated circuits and the like.
(4) In Embodiment 1, although description has been made that the peripheral device block 130 includes the hard disk device 131, the hard disk device interface 141, the reader/writer 132, the reader/writer interface 142, the output device 133, the output device interface 143, the input device 134, the input device interface 144, and the communication device 135, the present invention is not limited to this. The peripheral device block 130 need not include all of the components as described above, provided that the peripheral device block 130 includes at least the output device 133, the output device interface 143, the input device 134, and the input device interface 144.
(5) In Embodiment 1, although description has been made that the AV decoder 160 performs MPEG-2 decoding, MPEG-4 decoding, and MPEG-4 AVC decoding, the present invention is not limited to this. The AV decoder 160 may be capable of decoding data encoded using an encoding method not which is not included in the above.
(6) In Embodiment 1, although description has been made that the output device 133 includes an LCD (Liquid Crystal Display) and a speaker, the present invention is not limited to this, and the output device 133 may include, instead of an LCD, a PDP (Plasma Display Panel) display, an organic electro-luminescence display, or a cathode ray tube display.
(7) In Embodiment 1, although description has been made that the playback device 1000 is a personal computer, the present invention is not limited to this, and the playback device may be various other devices, provided that the device is capable of decrypting content. Examples of such devices are: a general purpose computer; a TV receiver; a DVD player; a DVD recorder/player; a BD player; a BD recorder/player; a PDA (Personal Digital Assistance); and a mobile phone terminal.
(8) In Embodiment 1, although description has been made that the input device 134 includes a keyboard and a mouse, both of which are for receiving user operations, the present invention is not limited to this. The input device may be other devices capable of receiving user operations made for the playback device 1000, provided that the device is capable of receiving user operations. Examples of such devices are : an input button for receiving user operations; and a receiving device for receiving signals transmitted from remote controllers which are controlled by the user.
(9) In Embodiment 1, although description has been made that the content to be decrypted is a content obtained by performing multiplexing on a combination of an encrypted Video ES, an encrypted Audio 1 ES, and an encrypted Audio 2 ES, the present invention is not limited to this. The content to be decrypted may be a content obtained by performing multiplexing on a combination of ESs besides the above-mentioned combination, provided that the content is obtained as a result of performing multiplexing on a combination of at least 2 ESs which are different from one another.

For example, the content to be decrypted may be a content obtained by performing multiplexing on combination of a Video ES, a Video 2 ES, a Video 3 ES, and an Audio ES.

Additionally, although description has been made that the encrypted Video ES is obtained as a result of encoding recorded images applying the MPEG-4 AVC standard, and further encrypting each of the multiple video frames obtained as a result of the encoding in the CBC mode, the present invention is not limited to this. The encoding method applied may be other encoding methods including such methods as the MPEG-2 standard, the MPEG-4 standard, the Motion JPEG (Joint Photographic Experts Group) standard and the like.

Further in addition, although description has been made that the encrypted Audio 1 ES and the encrypted Audio 2 ES are obtained as a result of encoding recorded audios applying the MPEG-4 AVC standard, and further encrypting each of the multiple video frames obtained as a result of the encoding in the CBC mode, the present invention is not limited to this. The encoding method applied may be other encoding methods, including such methods as the MPEG-2 standard, the MPEG-4 standard, the Motion JPEG (Joint Photographic Experts Group) standard and the like.
(10) In Embodiment 1, although description has been made that the components of the chunk header each have fixed bit lengths and are arranged in a fixed order, the present invention is not limited to this. Bit lengths of the components need not be fixed, given that information indicating the bit lengths thereof are provided, and similarly, the order in which the components are arranged need not be fixed, given that information indicating the order in which the components are arranged is provided.
(11) In Embodiment 1, although description has been made that the chunk data is composed of 3 ciphertext blocks, the present invention is not limited to this, and the chunk data may be composed of more than 3 or less than 3 ciphertext blocks.
(12) In Embodiment 1, although description has been made that the ciphertext blocks are obtained as a result of performing encryption employing the CTR mode of the AES algorithm, the present invention is not limited to this. More specifically, the encryption may be performed employing other modes of encryption such as the CBC (Cipher Block Chaining) mode, or employing other encryption algorithms, such as the DES (Data Encryption Standard) algorithm.

Additionally, although it is specified that the bit lengths of each of the ciphertext block, the chaining value, and the key is 128 bits, the present invention is not limited to this. According to the encryption methods employed to obtain the ciphertext blocks, the bit length of such data may be greater or less than 128 bits.

For example, when the DES algorithm is employed in the encryption, the data lengths of each of the ciphertext block, the chaining value, and the key will be 56 bits.
(13) In Embodiment 1, although description has been made that the cryptographic unit 111 includes an AES encryption circuit 701, the present invention is not limited to this. According to the encryption method employed, the encryption circuit may be a circuit utilizing other encryption methods, such as a DES encryption circuit.
(14) In Embodiment 1, although description has been made that the incrementer increments, by "1", the lower 32 bit portion of the chaining value input to calculate the chaining value to be applied to the subsequent ciphertext block, the present invention is not limited to this. The incrementer may be modified to increment a different portion of the chaining value, for instance the lower 64 bits of the chaining value, or be modified to increment the chaining value by values other than "1", such as by "2" or by "-1".
(15) In Embodiment 1, although description is made on the data format of the content to be decrypted with reference to the accompanying drawings, the present invention is not limited to this. The content to be decrypted may have other file formats, provided that the file format conforms with the description made herein. For example, the content may be in the ASF (Advance Streaming Format), the MP4 file format, the QuickTime file format and the like.
(16) In Embodiment 1, description is made on an example where a different key is applied for the decryption of each of the different content types, but the present invention is not limited to this. A case may be conceived in which a basic key is prepared, and specific keys for each of the content types are generated by performing different processing on the basic key.
(17) In Embodiment 1, although description has been made that the CPU block 110 includes 2 CPUs, the memory block is composed of a ROM and a RAM, the cipher engine 150 is a DSP, and the AV decoder 160 is a DSP, the present invention is not limited to this. The present invention may have a structure besides this, for instance a structure in which the CPU block 110, the memory block 120, the peripheral device block 130, the cipher engine 150, the AV decoder 160 and a part of the bus line 140 are embodied on a single integrated circuit.

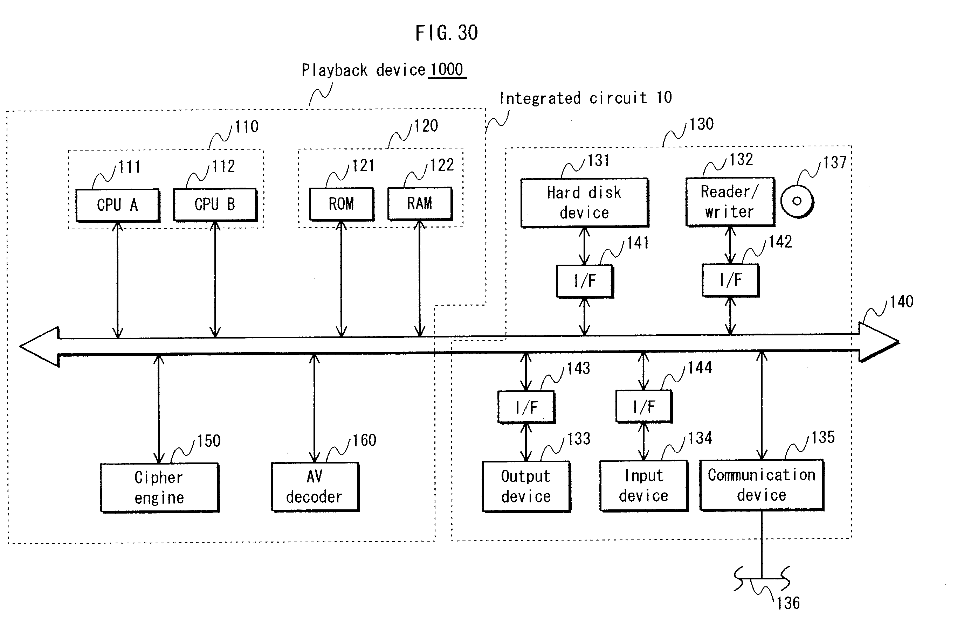

Fig. 30 is a block diagram showing a block structure of the playback device 1000 in which the CPU block 110, the memory block 120, the peripheral device block 130, the cipher engine 150, the AV decoder 160 and a part of the bus line 140 are embodied on a single integrated circuit 10.
(18) In Embodiment 4, although description has been made that the content to be decrypted has a data format in which the key information 2205 is included in the chunk header 2200, the present invention is not limited to this, and the key information 2205 may be included within a ciphertext block composing the chunk data 2220.

In a case where the content has a data structure as mentioned above, the chunk information obtaining unit 2210 is to obtain key information from the ciphertext block composing the chunk data 2220, and the key generation unit 2101 is to obtain the key information from the chunk information obtaining unit 2210.

Further, when the key information is encrypted, the key generation unit 2101 is to first decrypt the encrypted key information before generating the key in such a case.

Similarly, although description has been made in Embodiment 4 that the content to be decrypted has a data format in which the initialization vector information 2206 is included in the chunk header 2200, the present invention is not limited to this, and the initialization vector information 2206 may be included within a ciphertext block composing the chunk data 2220.

In a case where the content has a data structure as mentioned above, the chunk information obtaining unit 2210 is to obtain the initialization vector information from the ciphertext block composing the chunk data 2220, and the key generation unit 2101 is to obtain the initialization vector information from the chunk information obtaining unit 2210.

Further, when the initialization vector information is encrypted, the key generation unit 2101 is to first decrypt the encrypted initialization vector information before generating the key in such a case.
(19) In Embodiment 4, although description has been made that the key information 2205 is information used for the generation of a key and the initialization vector information 2206 is information used for the generation of an initialization vector, the present invention is not limited to this, and the key information 2205 may be the key itself, while the initialization vector information 2206 may be the key itself.
(20) In Embodiment 4, a same key information 2205 may be applied to all frames belonging to each of the encrypted ESs, or a different key information 2205 may be applied to each chunk. Further, in a case where the key information 2205 is included in a ciphertext block composing the chunk data 2220, a plurality of key informations 2205 may exist in one chunk, and a different key information 2205 may be applied to each of the ciphertext blocks constituting the same chunk.

Similarly, in Embodiment 4, a same initialization vector information 2206 may be applied to all frames belonging to each of the encrypted ESs, or a different initialization vector information 2206 may be applied to each chunk. Further, in a case where the initialization vector information 2206 is included in a ciphertext block composing the chunk data 2220, a plurality of initialization vector informations 2206 may exist in one chunk, and a different initialization vector information 2206 may be applied to each of the ciphertext blocks constituting the same chunk.
(21) In Embodiment 5, although description has been made that the first processing unit 2501 is controlled by the CPUA 111 and the second processing unit 2502 is controlled by the CPUB 112, the present invention is not limited to this. For example, the first processing unit 2501 may be controlled by both the CPUA 111 and the CPUB 112, and the second processing unit 2502 may be controlled by both the CPUA 111 and the CPUB 112.

Further, when the CPU block 110 is composed of 3 or more CPUs, the first processing unit 2501 may be controlled by 3 or more CPUs, and the second processing unit 2502 may be controlled by 3 or more CPUs.

Further in addition, it may also be conceived to provide a secure CPU with the function of concealing the information handled thereby, and by causing the secure CPU to be controlled by the second processing unit 2502, to conceal the key and the initialization vector stored in the key storing unit 214 from third parties.
(22) In Embodiment 5, although description is made on an exemplary case where the second processing unit 2502 launches the content decrypting processing after the first processing unit 2501 completes the chunk data accumulation processing, the present invention is not limited to this. Even if the chunk data processing by the first processing unit 2501 is not completed, the second processing unit may launch the content decrypting processing, provided that a certain amount of chunk information is stored in the cryptographic information accumulation unit 2530.
(23) In Embodiment 1, although description has been made that the external recording medium 137 is such media as a DVD, a DVD-R, DVD-RAM, BD, BD-R, BD-RE, and the like, the present invention is not limited to this. The external recording medium 137 may be such media, for example a CD(Compact Disc), a CD-R, an SD card, and the like, which are computer-readable media.

In addition, although description has been made that the reader/writer 132 is capable of performing reading/writing of data on such media as a DVD, a DVD-R, a BD, a BD-R, a BD-RE, and the like, the present invention is not limited to this. The reader/writer 132 may be capable of performing reading/writing of data on such other media for example a CD, a CD-R, an SD card, and the like.
(24) In Embodiment 1, although description has been made that the external transmission medium 136 is an optical communication network, a telecommunication line, a broadcast wave, and the like, the present invention is not limited to this. Provided that digital signals can be exchanged by utilizing the communication, the communication may be realized by utilizing a wireless connection, a wired connection, an infrared connection, or other connections.

### [Industrial Applicability]

The present invention has a wide range of potential applications, being a decrypting processing apparatus for decrypting encrypted digital data.

### [Reference Signs List]

- 150: cipher engine
- 201: input buffer
- 202: output buffer
- 210: chunk information obtaining unit
- 211: encryption size calculation unit
- 212: key setting unit
- 213: chaining judging unit
- 214: key storing unit
- 216: inter-chunk chaining value holding unit
- 221: cryptographic judgment unit
- 222: cryptographic unit
- 223: key holding unit
- 224: initialization vector holding unit
- 225: initialization vector selection unit
- 226: chaining value selection unit
- 227: in-chunk chaining value holding unit
- 228: chaining value recording unit
- 229: output selection unit

## Claims

1. A content decrypting apparatus for sequentially decrypting a data stream including intermixture of a plurality of cipher block sequences each belonging to a first encrypted frame and a plurality of cipher block sequences each belonging to a second encrypted frame, each encrypted frame encrypted by employing a cipher block chaining method, each cipher block sequence including a plurality of cipher blocks which are linked in a cipher block chain, the content decrypting apparatus comprising:
a decryption unit operable to sequentially decrypt cipher blocks in a cipher block sequence to be decrypted, while generating a plurality of chaining values used for the decryption, such that every time a cipher block is decrypted, a chaining value to be applied in decryption of the subsequent cipher block is generated;
a chaining value holding unit operable to hold identifiers of encrypted frames and the chaining values in association with each other;
a chaining value storing unit operable to cause the chaining value holding unit to hold, when the last cipher block in a cipher block sequence has been decrypted by the decryption unit, an identifier of the encrypted frame to which the decrypted last cipher block belongs and a chaining value generated by the decryption unit during decryption of the last cipher block in association with each other, wherein
the decryption unit, in a case where the cipher block to be decrypted is the first cipher block in a cipher block sequence and a portion of an encrypted frame to which the first cipher block belongs has been decrypted in advance, refers to the chaining value holding unit and selects, as the chaining value to be used in the decryption of the first cipher block, a chaining value generated during decryption of the most recently decrypted cipher block among the cipher blocks belonging to the encrypted frame.

2. The content decrypting apparatus of Claim 1, wherein
the chaining value holding unit includes an in-chunk chaining value holding unit for holding chaining values,
the chaining value storing unit, when a cipher block other than the last cipher block in a cipher block sequence has been decrypted by the decryption unit, overwrites the chaining value held by the in-chunk chaining value holding unit with a chaining value generated by the decryption unit during the decryption of the cipher block other than the last cipher block, and
the decryption unit, when the cipher block to be decrypted is a cipher block in a cipher block sequence other than the first cipher block, uses the chaining value held by the in-chunk chaining value holding unit to decrypt the cipher block.

3. The content decrypting apparatus of Claim 1, wherein
the chaining value storing unit causes the chaining value holding unit to hold a combination of an identifier and a chaining value for each of the first encrypted frame and the second encrypted frame.

4. The content decrypting apparatus of Claim 1, further comprising:
a data appending unit operable to, when a cipher block to be decrypted by the decryption unit has a smaller bit count than a predetermined bit count, generate a synthesized cipher block having the predetermined bit count by calculating a difference between the predetermined bit count and a bit count of the cipher block, and appending data having a bit count equivalent to the calculated difference to the head of the cipher block to be decrypted;
a decrypted data holding unit operable to hold a cipher block decrypted by the decryption unit; and
a decrypted data storing unit operable to cause the decrypted data holding unit to hold a portion of a cipher block decryopted by the decryption unit, wherein
when the cipher block to be decrypted has a smaller bit count than the predetermined bit count:
the data appending unit generates the synthesized cipher block having the predetermined bit count by appending data to the cipher block to be decrypted;
the decryption unit decrypts the synthesized cipher block instead of the cipher block to be decrypted; and
the decrypted data storing unit causes the decrypted data holding unit to hold a portion of the decrypted synthesized cipher block other than the portion obtained by the decryption unit performing decryption on the data appended to the cipher block by the data appending unit.

5. A content decrypting method for causing a content decrypting apparatus to sequentially decrypt a data stream, the content decrypting apparatus including a chaining value holding unit for holding identifiers of encrypted frames and chaining values in association with each other, the data stream to be decrypted including intermixture of a plurality of cipher block sequences each belonging to a first encrypted frame and a plurality of cipher block sequences each belonging to a second encrypted frame, each encrypted frame encrypted by employing a cipher block chaining method, each cipher block sequence including a plurality of cipher blocks which are linked in a cipher block chain, the content decrypting method comprising:
a decrypting step in which a decryption unit of the content decrypting apparatus sequentially decrypts cipher blocks in a cipher block sequence to be decrypted, while generating a plurality of chaining values used for the decryption, such that every time a cipher block is decrypted, a chaining value to be applied in decryption of the subsequent cipher block is generated;
a chaining value storing step in which a chaining value storing unit of the content decrypting apparatus causes the chaining value holding unit to hold, when the last cipher block in a cipher block sequence has been decrypted by the decryption unit, an identifier of the encrypted frame to which the decrypted last cipher block decrypted in the decrypting step belongs and a chaining value generated by the decryption unit during decryption of the last cipher block in association with each other, wherein
in the decrypting step, when the cipher block to be decrypted is the first cipher block in a cipher block sequence and a portion of an encrypted frame to which the first cipher block belongs has been decrypted in advance, a chaining value generated during decryption of the most recently decrypted cipher block among the cipher blocks belonging to the encrypted frame is selected as the chaining value to be used in the decryption of the first cipher block.

6. An integrated circuit for sequentially decrypting a data stream including intermixture of a plurality of cipher block sequences each belonging to a first encrypted frame and a plurality of cipher block sequences each belonging to a second encrypted frame, each encrypted frame encrypted by employing a cipher block chaining method, each cipher block sequence including a plurality of cipher blocks which are linked in a cipher block chain, the integrated circuit comprising:
a decryption unit operable to sequentially decrypt cipher blocks in a cipher block sequence to be decrypted, while generating a plurality of chaining values used for the decryption, such that every time a cipher block is decrypted, a chaining value to be applied in decryption of the subsequent cipher block is generated;
a chaining value holding unit operable to hold identifiers of encrypted frames and the chaining values in association with each other;
a chaining value storing unit operable to cause the chaining value holding unit to hold, when the last cipher block in a cipher block sequence has been decrypted by the decryption unit, an identifier of the encrypted frame to which the decrypted last cipher block belongs and a chaining value generated by the decryption unit during decryption of the last cipher block in association with each other, wherein
the decryption unit, in a case where the cipher block to be decrypted is the first cipher block in a cipher block sequence and a portion of an encrypted frame to which the first cipher block belongs has been decrypted in advance, refers to the chaining value holding unit and selects, as the chaining value to be used in the decryption of the first cipher block, a chaining value generated during decryption of the most recently decrypted cipher block among the cipher blocks belonging to the encrypted frame.
